# EUROPEAN PATENT SPECIFICATION

(11) **EP 4 427 413 B1**
(45) Date of publication and mention of the grant of the patent: **26.03.2025**
(21) Application number: 22809886.9
(22) Date of filing: 03.11.2022
(51) Int. Cl.: H04L 41/0659, H04W 24/04, H04W 88/14, H04L 41/0654, H04L 43/106

(54) **ENHANCEMENT TO A GTP-U ENTITY RESTART**
VERBESSERUNG AN EINEM GTP-U-EINHEITSNEUSTART
AMÉLIORATION D'UN REDÉMARRAGE D'ENTITÉ GTP-U

(30) Priority: 05.11.2021 US 202163276035 P
(43) Date of publication of application: 11.09.2024
(73) Proprietor: Telefonaktiebolaget LM Ericsson (publ), 164 83 Stockholm (SE)
(72) Inventor: YANG, Yong, 428 36 Kållered (SE); WIKSTRÖM, Erik, 417 68 Göteborg (SE); OLSSON, Tony, 474 96 Nösund (SE)
(74) Representative: Ericsson
(86) International application number: PCT/EP2022/080624
(87) International publication number: WO 2023/078970

(56) References cited:
- WO-A1-2021/083645
- US-A1- 2022 377 826
- NOKIA ET AL: "Pseudo-CR on Restoration for User Plane interfaces", vol. CT WG4, no. Sophia Antipolis, France; 20180709 - 20180713, 12 July 2018 (2018-07-12), XP051472443, Retrieved from the Internet <URL:http://www.3gpp.org/ftp/tsg%5Fct/WG4%5Fprotocollars%5Fex%2DCN4/TSGCT4%5F85bis%5FSophia%5FAntipolis/Docs> [retrieved on 20180712]
- "3rd Generation Partnership Project; Technical Specification Group Core Network and Terminals; Restoration procedures; (Release 17)", vol. CT WG4, no. V17.2.0, 16 September 2021 (2021-09-16), pages 1 - 116, XP052056521, Retrieved from the Internet <URL:https://ftp.3gpp.org/Specs/archive/23_series/23.007/23007-h20.zip 23007-h20.docx> [retrieved on 20210916]
- "3rd Generation Partnership Project; Technical Specification Group Core Network and Terminals; 5G System; Restoration Procedures (Release 16)", vol. CT WG4, no. V16.1.0, 19 September 2019 (2019-09-19), pages 1 - 19, XP051784569, Retrieved from the Internet <URL:ftp://ftp.3gpp.org/Specs/archive/23_series/23.527/23527-g10.zip 23527-g10.docx> [retrieved on 20190919]
- "3rd Generation Partnership Project; Technical Specification Group Core Network and Terminals; Study on Control and User Plane Separation of EPC Nodes (Release 14)", 3GPP STANDARD ; TECHNICAL REPORT ; 3GPP TR 29.844, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. V14.0.0, 19 June 2017 (2017-06-19), pages 1 - 52, XP051298841
- HUAWEI ET AL: "Clarification on Handling of ICMP", vol. SA WG3, no. Online Meeting ;20200511 - 20200515, 1 May 2020 (2020-05-01), XP051879739, Retrieved from the Internet <URL:https://ftp.3gpp.org/tsg_sa/WG3_Security/TSGS3_99e/Docs/S3-201099.zip S3-201099.docx> [retrieved on 20200501]

## Description

### BACKGROUND

About 20 years ago, 3GPP has decided to remove the usage of Recovery from the General Packet Radio Service (GRPS) Tunnelling Protocol (GTP) Echo Response message for user plane (GTP-U), where the Recovery is defined as the restart counter for a GTP entity. Since, at that time, a GTP entity comprises a Control Plane (CP) part and User Plane (UP) parts, it is redundant to communicate the restart counter for a GTP entity via both the control plane signalling path and user plane payload path.

The usage of the "Restart counter" field in the "Recovery" information element in GTP-U messages was changed in March 2000 through 3GPP TS 29.060 Rel-3 CR 096, which was written on 3GPP TS 29.060 V3.4.0 and was implemented in 3GPP TS 29.060 V3.5.0. The "Reason for change" in the CR (3GPP TS 29.060 Rel-3 CR 096) reads as follows: "Restart counter in the Echo response message is used to inform the peer node that a node has experienced a restart. It is unnecessary to use the Restart counter value in both GTP-U and GTP-C, since it is sufficient to use it only in GTP-C. Moreover, at lu interface RANAP already has a procedure for node restarts. Therefore, it is proposed that the Restart counter value in the Echo Response message is not used in GTP-U. The CR also proposes some clarifications how to react when Echo response is received."

Before 3GPP Rel-8, the normative specification of GTP-U was included together with GTPv1 in 3GPP TS 29.060. In 3GPP Rel-8, the normative specification of GTP-U was moved from 3GPP TS 29.060 to 3GPP TS 29.281. The text on GTP-U was, in fact, left "as was" in 3GPP TS 29.060 and a note was added at the beginning of clause 9 in the specification. The note reads as follows: "From release 8 onwards, the normative specification of the user plane of GTP version 1 is 3GPP TS 29.281 [41]. All provisions about GTPv1 user plane in the present document shall be superseded by 3GPP TS 29.281 [41]."

So as specified in TS 29.281, clause 7.2.2 states: "The Restart Counter value in **the Recovery information element shall not be used, i.e. it shall be set to zero by the sender and shall be ignored by the receiver.** The Recovery information element is mandatory due to backwards compatibility reasons. The optional Private Extension contains vendor or operator specific information." (Emphasis added).

### Figure 1

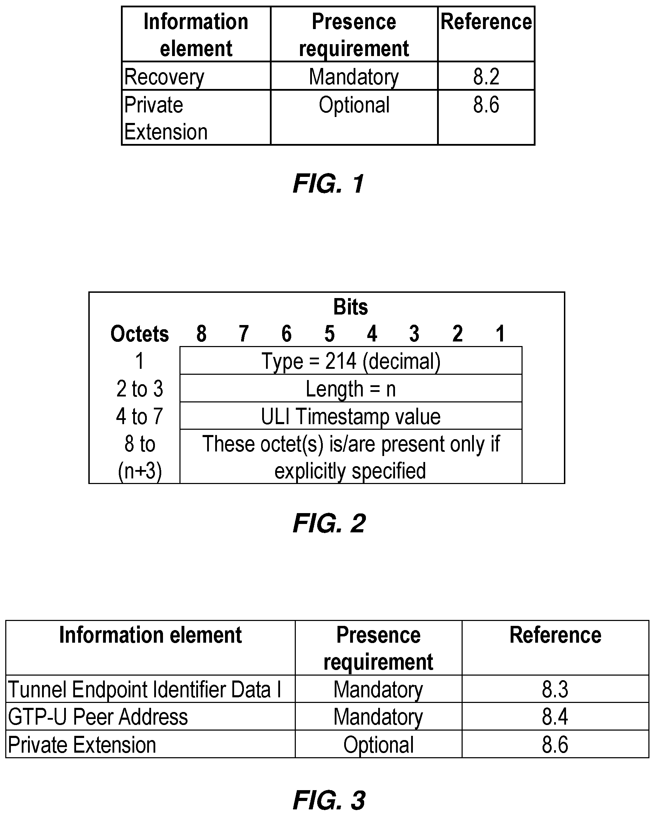

**Figure 1** of the present disclosure includes Table 7.2.2.-1 of the clause 7.2.2 of TS 29.281.

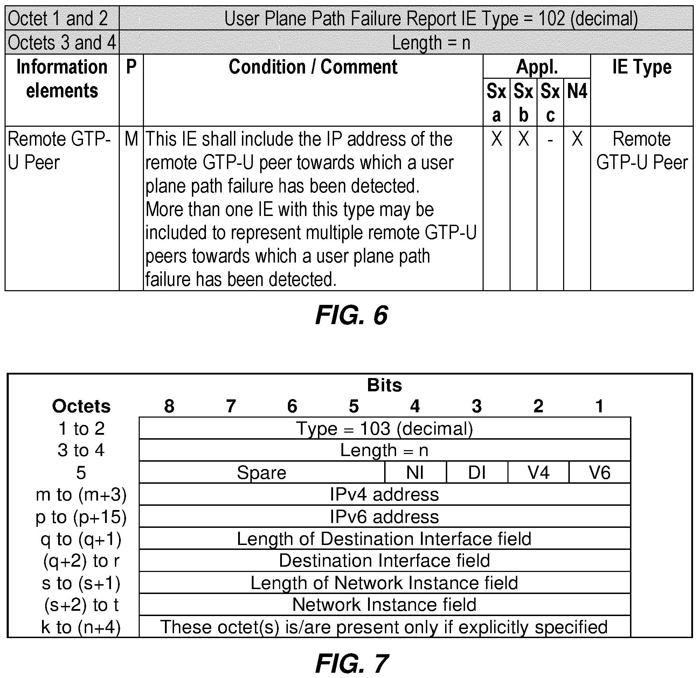

Further, clause 7.7.114 ("ULI Timestamp") of TS 29.281 discloses, "The ULI Timestamp IE is coded as shown in Figure 7.7.114-1. It indicates the UTC time when the user location information was acquired. Octets 4 to 7 are encoded in the same format as the first four octets of the 64-bit timestamp format as defined in clause 6 of IETF RFC 5905 [55]. NOTE: The encoding is defined as the time in seconds relative to 00:00:00 on 1 January 1900."

### Figure 2

**Figure 2** of the present disclosure includes the figure ("Figure 7.7.114-1: ULI Timestamp") in clause 7.7.114 of TS 29.281.

Consequently, 3GPP does not specify any requirement on the peer GTP-u restart, but only GTP-U path failure. For example, as stated in, in TS 23.527 for Fifth Generation System (5GS):

### Start of TS 23.527, clause 5.4

### 5.4 Restoration Procedures upon User Plane Path Failure

Upon detecting a GTP-U user plane path failure as specified in clause 5.2.2, the UPF shall report the user plane path failure to the SMF, by sending a PFCP Node Report Request (see 3GPP TS 29.244 [4]) including a User Plane Path Failure Report with the IP address of the remote GTP-U peer(s) towards which a failure has been detected. The UPF should also notify the GTP-U user plane path failure via the Operation and Maintenance system.

When the SMF receives the PFCP Node Report Request with a User Plane Path Failure Report, the SMF may:
- delete the PDU session contexts associated with the path in failure; or
- maintain the PDU session contexts associated with the path in failure during an operator configurable maximum path failure duration. The SMF shall delete the PDU session contexts associated with the path in failure if the path is still down when this duration expires.

NOTE 1: During transient path failures (e.g. path failures not exceeding few minutes at most), maintaining the PDU session contexts associated with the peer's IP address enables the delivery of end user services (when the path is re-established again) and this also avoids unnecessary signalling in the network for restoring those PDU sessions.

NOTE 2: It is not intended to maintain PDU session contexts during long path failures (e.g. exceeding few minutes at most) as this would imply undesirable effects like undue charging.

When deciding to delete the PDU session contexts associated with the path in failure, the SMF shall modify or delete the affected PFCP sessions in the UPF.

NOTE 3: The SMF need to take care to smoothen the signalling load towards the UPF if a large number of PFCP sessions are affected by the user plane path failure.

### End of TS 23.527, clause 5.4

And in TS 23.007 for EPS, clause 20.3 discloses:

### Start of TS 23.007, clause 20.3

### 20.3 User plane path failure detection and handling

### 20.3.1 General

GTP-U entities shall support detection of path failure by using Echo Request / Echo Response messages in the following way. A path counter shall be reset each time an Echo Response is received on the path and incremented when the T3-RESPONSE timer expires for any Echo Request message sent on the path. The path shall be considered to be down if the counter exceeds N3-REQUESTS.

Upon detecting a path failure, the network node should notify the failure via the Operation and Maintenance system and may either
- delete the bearer contexts associated with the path in failure; or
- maintain the bearer contexts associated with the path in failure during an operator configurable maximum path failure duration. The network node shall delete the maintained resources if the path is still down when this duration expires.

### End of TS 23.007, clause 20.3

When a GTP-U entity receives a GTP-U packets without corresponding context, it will send a GTP error indication. Clause 7.3.1 of TS 29.281 discloses:

### Start of TS 29.281, clause 7.3.1

### 7.3.1 Error Indication

**When a GTP-U node receives a G-PDU for which no EPS Bearer context, PDP context, PDU Session, MBMS Bearer context, or RAB exists, the GTP-U node shall discard the G-PDU. If the TEID of the incoming G-PDU is different from the value 'all zeros' the GTP-U node shall also return a GTP error indication to the originating node.** GTP entities may include the "UDP Port" extension header (Type 0x40), in order to simplify the implementation of mechanisms that can mitigate the risk of Denial-of- Service attacks in some scenarios.

Handling of the received Error Indication is specified in 3GPP TS 23.007 [3] and 3GPP TS 23.527 [33].

The information element Tunnel Endpoint Identifier Data I shall be the TEID fetched from the G-PDU that triggered this procedure.

The information element GTP-U Peer Address shall be the destination address (e.g. destination IP address, MBMS Bearer Context) fetched from the original user data message that triggered this procedure. A GTP-U Peer Address can be a GGSN, SGSN, RNC, PGW, SGW, ePDG, eNodeB, TWAN, MME, gNB, N3IWF, or UPF address. The TEID and GTP-U peer Address together uniquely identify the related PDP context, RAB, PDU session or EPS bearer in the receiving node.

The optional Private Extension contains vendor or operator specific information.

### End of TS 29.281, clause 7.3.1

### Figure 3

**Figure 3** of the present disclosure includes a table of TS 29.281, clause 7.3.1 ("Table 7.3.1-1: Information Elements in an Error Indication").

Once the peer GTP-U entity has received a GTP Error Indication, which indicates the user plane path for a given Packet Data Network (PDN) connection/Protocol Data Unit (PDU) session is broken, this has to be reported to control plane function, e.g. Serving Gateway Control plane function (SGW-C), or PDN Gateway Control plane function (PGW-C), or Session Management Function (SMF), so that the control plane function may trigger relevant control plane signalling procedure to request restarted GTP-U entity (e.g. a New Generation Radio Access Network (NG-RAN)) to setup the user plane for that PDN connection.

### Figure 4

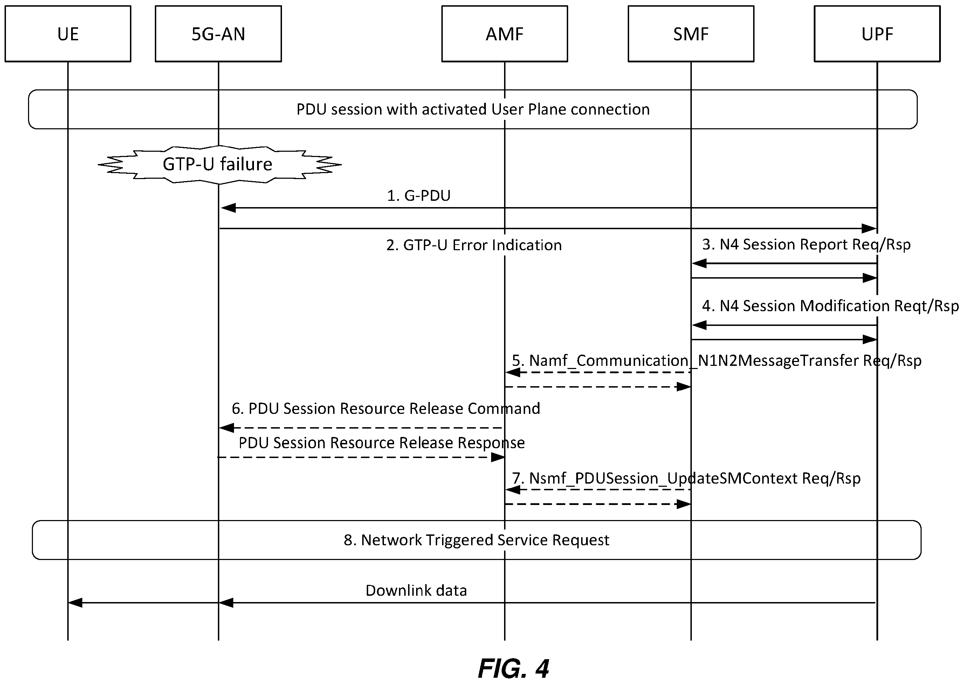

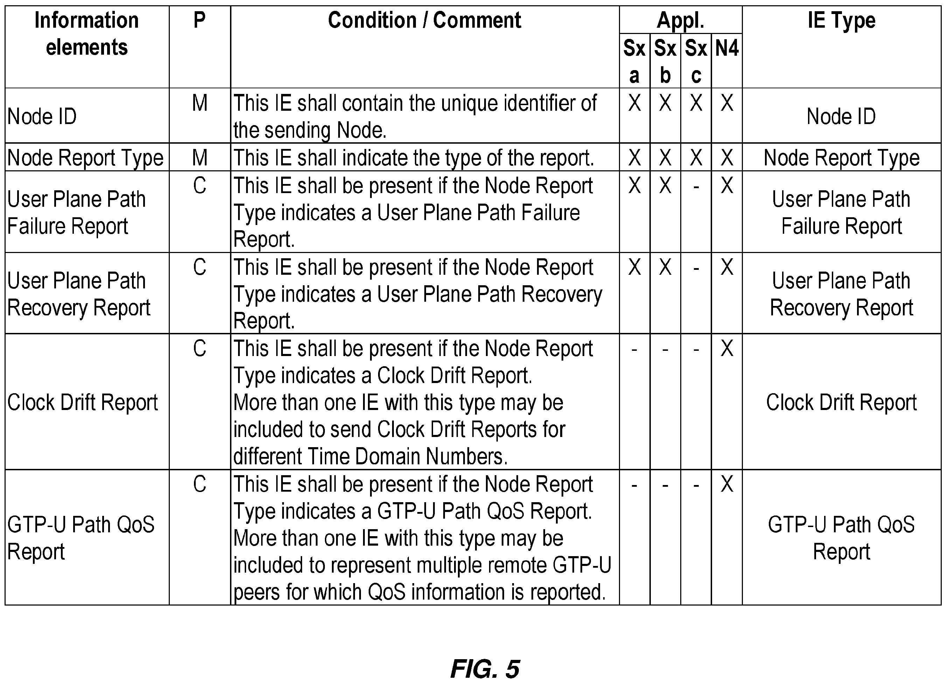

**Figure 4** includes a figure ("Figure 5.3.2.1-1: GTP-U Error Indication from 5G-AN") in clause 5.3.2 ("Procedure for GTP-U Error Indication received from 5G-AN") of TS 23.527. Regarding the figure ("Figure 5.3.2.1-1: GTP-U Error Indication from 5G-AN"), clause 5.3.2 of TS 23.527 further discloses:

### Start of TS 23.527, clause 5.3.2

1. The user plane connection of an existing PDU session is activated. Downlink G-PDUs are sent towards the 5G-AN.
2. The 5G-AN returns a GTP-U Error Indication if it does not have a corresponding GTP-U context (see clause 5.2).
**3. Upon receipt of a GTP-U Error Indication, the UPF shall identify the related PFCP session and send an Error Indication Report to the SMF, as specified in clause 5.10 of 3GPP TS 29.244 [4].**
**4. For a GTP-U Error Indication received from a 5G-AN, the SMF shall modify the PFCP session to instruct the UPF to buffer downlink packets.**
5. If the user plane connection of the PDU session is seen as activated by the SMF, the SMF shall initiate an Namf_Communication_N1N2MessageTransfer service operation to request the 5G-AN to release the PDU session's resources, as specified in clause 4.3.7 of 3GPP TS 23.502 [5].
6. Upon receipt of an Namf_Communication _N1N2MessageTransfer request to transfer the PDU Session Resource Release Command, the AMF shall:
   - proceed with the request, as specified in clause 5.2.2.3.1 of 3GPP TS 29.518 [6], if the UE is in CM-CONNECTED state for the Access Network Type associated to the PDU session;
   - otherwise, reject the request with an error indicating that the UE is in CM-IDLE state for the Access Network Type associated to the PDU session.
7. If the AMF sent a PDU Session Resource Release Command to the 5G-AN, the PDU session's resource release is acknowledged to the SMF.
8. The SMF initiates the Network Triggered Service Request procedure specified in clause 4.2.3.3 of 3GPP TS 23.502 [5], to re-activate the user plane connection of the PDU session.

### End of TS 23.527, clause 5.3.2

In TS 29.244, clause 7.4.5.1.1 ("PFCP Node Report Request - General") discloses, "The PFCP Node Report Request shall be sent over the Sxa, Sxb, Sxc and N4 interface by the UP function to report information to the CP function that is not specific to a PFCP session."

### Figure 5

**Figure 5** of the present disclosure includes a table ("Table 7.4.5.1.1-1: Information Elements in PFCP Node Report Request") in clause 7.4.5.1.1 of TS 29.244.

### Figure 6

**Figure 6** of the present disclosure includes a table ("Table 7.4.5.1.2-1: User Plane Path Failure Report IE within PFCP Node Report Request") of clause 7.4.5.1.2 ("User Plane Path Failure Report IE within PFCP Node Report Request") of TS 29.244.

### Figure 7

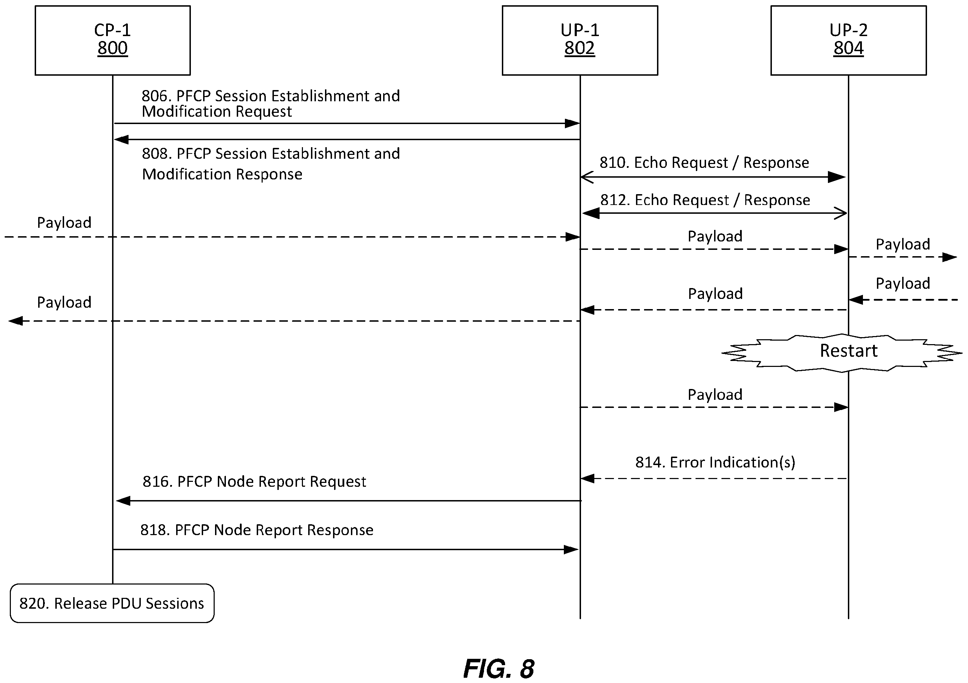

**Figure 7** of the present disclosure includes a figure ("Figure 8.2.70-1: Remote GTP-U Peer") in clause 8.2.70Figure 8.2 ("Remote GTP-U Peer") of TS 29.244.

### SUMMARY

The objectives of the present invention are achieved through the subject-matter of the independent claims 1 and 2, respectively claiming a method performed by a first User Plane, UP, function communicating with a Control Plane, CP, function and a second UP function in a telecommunication network for managing a restart of the second UP function and a method performed by a first User Plane, UP, function communicating with a Control Plane, CP, function and a second UP function in a telecommunication network for managing a restart of the second UP function.

Preferred embodiments are set out in the dependent claims.

There currently exist certain challenge(s). In the event of a GTP-U entity restart, for example, a NG-RAN (e.g., a gNB) has restarted, it will lose all its contexts, therefore it is not possible to find corresponding contexts for the DL GTP-U packets from Intermediate User Plane Function (I-UPF) or Visiting UPF (V-UPF). This triggers the restarted GTP-U entity to send massive amounts of GTP error indication messages, which, in turn, leads to massive amounts of signalling over Sx/N4 interface since the UP function has to report the receiving of GTP error indication to the CP function.

When a GTP-U entity has restarted, such massive signalling over GTP-U interface (for sending GTP error indication) and over Sx/N4 (reporting the receiving of GTP error indication and Packet Forwarding Control Protocol (PFCP) session modification signalling to update DL FAR) should be avoided.

Certain aspects of the disclosure and their embodiments may provide solutions to these or other challenges. The present disclosure proposes embodiments for enabling a GTP-U entity (e.g., for SGW-U, PGW-U, or UPF) to detect that the peer GTP-U entity has restarted and if so, to report the restart of the peer GTP-U entity to the CP function (e.g., SGW-C, PGW-C, SMF), so that CP function can restore the user plane path.

The embodiments of the present disclosure include one or more of the following features:
1. Add recovery timestamp in Echo Response message. The recovery timestamp may reuse GTPv1 IE "ULI Timestamp" or a new IE with same encoding as in "ULI Timestamp" IE.
2. Add recovery timestamp in GTP error indication to populate the restart to the peer GTP-U entity as soon as possible. Some GTP-U entity implementation may not send an Echo request/response when there are payload packets transferring. In this case, the user plane path may be considered as healthy.
3. Add a list of IP address (affected by the restart) in the GTP error indication since a User Plane function (UP function) may have multiple GTP-U entities which is identified by "IP address."
4. When the UP function detects the peer GTP-U has restarted, the UP function will send a "PFCP Node Report Request" message to the CP function. The PFCP Node Report Request message contains the information that the peer GTP-U entity has restarted together with a list of IP addresses, and Network Instance/Destination interface. In addition, the UP function indicates that the UP function is about to remove the remote Fully qualified Tunnel Endpoint Identifier (F-TEID) and set Apply-Action to "buffering" in the FAR (containing the remote F-TEID which was allocated by the remote GTP-U entity and thus it has been affected by the remote GTP-U restart) for all PFCP sessions affected by peer GTP-u restart, so that the CP function does not need to send a "PFCP Session Modification Request" per a PFCP session to do this (e.g., the CP function removes the remote F-TEID in the FAR and change apply-action).
5. The CP function acknowledges the report that the peer GTP-U entity has restarted, the F-TEID allocated by the restarted GTP-U entity becomes invalid and should be removed from affected PFCP sessions.
6. The CP function decide to release the PDU sessions which affected by the remote GTP-U restart based on local configuration, e.g. to release the affected PDU sessions if the restarted remote GTP-U entity is a PDU Session Anchor (PSA) UPF; or to restore the user plane connection for affected PDU sessions, e.g., if the restarted remote GTP-U entity is a NG-RAN (e.g., gNB) or RAN (e.g., eNB).

Certain embodiments may provide one or more of the following technical advantage(s). Massive signalling for a GTP-U entity restart may be avoided where the GTP-U has lost all its GTP-U contexts and those GTP-U contexts cannot be restored by other means, e.g., via its CP function.

### BRIEF DESCRIPTION OF THE DRAWINGS

These and other objects, features and advantages of the disclosure will become apparent from the following detailed description of illustrative embodiments thereof, which are to be read in connection with the accompanying drawings.
- **FIG. 1**: includes Table 7.2.2.-1 of clause 7.2.2 in TS 29.281;
- **FIG. 2**: includes the figure ("Figure 7.7.114-1: ULI Timestamp") in clause 7.7.114 of TS 29.281;
- **FIG. 3**: includes a table of TS 29.281, clause 7.3.1 ("Table 7.3.1-1: Information Elements in an Error Indication");
- **FIG. 4**: includes a figure ("Figure 5.3.2.1-1: GTP-U Error Indication from 5G-AN") in clause 5.3.2 ("Procedure for GTP-U Error Indication received from 5G-AN") of TS 23.527;
- **FIG. 5**: includes a table ("Table 7.4.5.1.1-1: Information Elements in PFCP Node Report Request") in clause 7.4.5.1.1 of TS 29.244;
- **FIG. 6**: includes a table ("Table 7.4.5.1.2-1: User Plane Path Failure Report IE within PFCP Node Report Request") of clause 7.4.5.1.2 ("User Plane Path Failure Report IE within PFCP Node Report Request") of TS 29.244;
- **FIG. 7**: includes a figure ("Figure 8.2.70-1: Remote GTP-U Peer") in clause 8.2.70 ("Remote GTP-U Peer") of TS 29.244;
- **FIG. 8**: illustrates one embodiment of a procedure for detecting and reporting a peer GTP-U entity restart, in accordance with one example embodiment of the present disclosure;
- **FIG. 9**: illustrates one embodiment wherein the CP-1 800 may perform a number of steps;
- **FIG. 10**: illustrates one embodiment wherein the UP-1 802 may perform a number of steps;
- **FIG. 11**: illustrates one embodiment wherein the UP-2 804 may perform a number of steps;
- **FIG. 12**: illustrates one embodiment wherein the CP-1 800 may perform a number of steps;
- **FIG. 13**: illustrates one example of a cellular communications system 1300 in which embodiments of the present disclosure may be implemented;
- **FIG. 14**: illustrates a wireless communication system represented as a 5G network architecture composed of core Network Functions (NFs), where interaction between any two NFs is represented by a point-to-point reference point/interface;
- **FIG. 15**: illustrates a 5G network architecture using service-based interfaces between the NFs in the CP, instead of the point-to-point reference points/interfaces used in the 5G network architecture of Figure 14;
- **FIG. 16**: is a schematic block diagram of a network node 1600 according to some embodiments of the present disclosure;
- **FIG. 17**: is a schematic block diagram that illustrates a virtualized embodiment of the network node 1600 according to some embodiments of the present disclosure;
- **FIG. 18**: is schematic block diagram of the network node 1600 according to some other embodiments of the present disclosure.

### DETAILED DESCRIPTION

Some of the embodiments contemplated herein will now be described more fully with reference to the accompanying drawings. Embodiments are provided by way of example to convey the scope of the subject matter to those skilled in the art. Additional information may also be found in the document(s) provided in the Appendices (Appendix 1 and Appendix 2).

### Figure 8

**Figure 8** illustrates one embodiment of a procedure for detecting and reporting a peer GTP-U entity restart, in accordance with one example embodiment of the present disclosure. The procedure is performed by a CP function ("CP-1 800"), a first UP function ("UP-1 802"), and a second UP function ("UP-2 804"). The CP-1 800 may be or be implemented in SGW-C, PGW-C, or SMF. The UP-1 802 or the UP-2 804 may be or be implemented in gNB, eNB, SGW-U, PGW-U, I-UPF (Intermediate UPF), or V-UPF (Visiting UPF). Figure 8 of the present disclosure illustrates the following steps.

In step 806 and step 808, PFCP Session Establishment and Modification Request / Response messages are used to setup PFCP session between the CP-1 800 and the UP-1 802. The procedure enables the CP-1 800 to provide a remote GTP-U's (the UP-2 804) F-TEID (IP address + Tunnel Endpoint ID) to the UP-1 802. In other words, the PFCP Session Establishment and Modification Request message may contain the remote GTP-U 's F-TEID. Thus, the UP-1 802 will send the payload towards and, at the same time, the UP-1 802 will provide its GTP-U F-TEID (that is used to receive a payload from the remote GTP-U (the UP-2 804)) to the CP function. The CP function will further use control plane signalling to populate the UP-1's GTP-U F-TEID to the UP-2 804, e.g. via NGAP signalling message (a PDU Session Resource Setup Request message if the UP-2 804 is a NG-RAN node).

In step 810 and step 812, the UP-1 802 may send an "Echo Request" to the UP-2 804, which includes the IP address (in the F-TEID from the UP-2 804) to probe the liveness of the UP-2 804. The Echo Request comprises Recovery Information of the UP-1 802, which is identified by the source IP address of the Echo Request. The UP2 will reply with an "Echo Response" message that contains its Recovery Information, which is identified by the resource IP address of the Echo Response. The UP-1 802 will store the UP-2's Recovery Information for future comparison. The UP-2 804 may send an "Echo Request" to the UP-1 802 as well. Then, the UP-2 2 804 may receive an "Echo Response" from the UP-1 802 as well. A payload is transferring end to end, including the segment between the UP-1 802 and the UP-2 804. The UP-2 804 has restarted and recovered from the restart. However, the UP-2 804 has lost all its GTP-U contexts, i.e. it cannot recognize the F-TEIDs it allocated before its restart.

In step 814, when the restarted UP-2 804 receives a payload addressing a GTP-U F-TEID which it does not recognize, the restarted UP-2 804 sends (1) a "GTP Error Indication" message, which contains a changed Recovery Information, and (2) a list of IP address affected by the restart, i.e. all GTP-U context associated with these IP addresses have been lost.

In step 816, the UP-1 802 sends a "PFCP Node Report Request" message to the CP-1 800, which indicates that (1) the peer UP (the UP-2 804) has restarted, and GTP-U context associated with a list of IP addresses (provided in GTP Error Indication) have been lost; and (2) the UP-1 802 is to set apply-action in DL FAR to "buffering" and remove DL F-TEID (from the UP-2 804), for all affected PFCP sessions, i.e. the CP-1 800 needs not to send a "PFCP Session Modification Request" message to change DL FAR per a PFCP session.

In step 818, as a response to the PFCP Node Report Request message, the CP-1 800 sends, to the UP-1 802, a "PFCP Node Report Response" comprising an acknowledgment that the Downlink FAR in all affected PFCP sessions (with the restarted UP-2 804) has been updated with apply-action set to "buffering," and remote F-TEID (from the UP-2 804) is removed.

In step 820, the CP-1 800 decides to release the PDU sessions affected by the remote GTP-U restart based on a local configuration, e.g. to release the affected PDU sessions if the restarted remote GTP-U entity is a PSA UPF; or to restore the user plane connection for affected PDU sessions, e.g. if the restarted remote GTP-U entity is a NG-RAN (e.g., gNB) or RAN (e.g., eNB).

### Figure 9

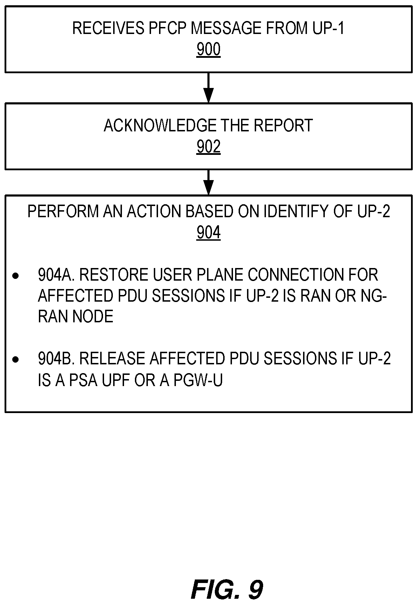

In one embodiment, the CP-1 800 may perform the following steps illustrated in **Figure 9**.

In step 900, the CP-1 800 receives a PFCP message, from the UP-1 802, containing a report related to the UP-2 804 has restarted. Optionally, the PFCP message is a PFCP Node Report Request message. Optionally, the report further comprises an indication that the UP-1 802 has removed remote F-TEID(s) allocated by the UP-2 804 and changed apply-action in FAR to "buffering" for all affected PFCP sessions.

In step 902, the CP-1 800 acknowledges the report, i.e. the CP-1 800 will not send a PFCP session modification request message to remove the remote F-TEID and change Apply-action in FAR to the UP-1 802.

In step 904, the CP-1 800 performs an action based on an identity of the UP-2 804. In step 904A, the CP-1 800 restores a user plane connection for affected PDU sessions if the UP-2 804 is RAN or NG-RAN node. In step 904B, the CP-1 800 releasing the affected PDU sessions if the UP-2 804 is a PSA UPF or a PGW-U.

### Figure 10

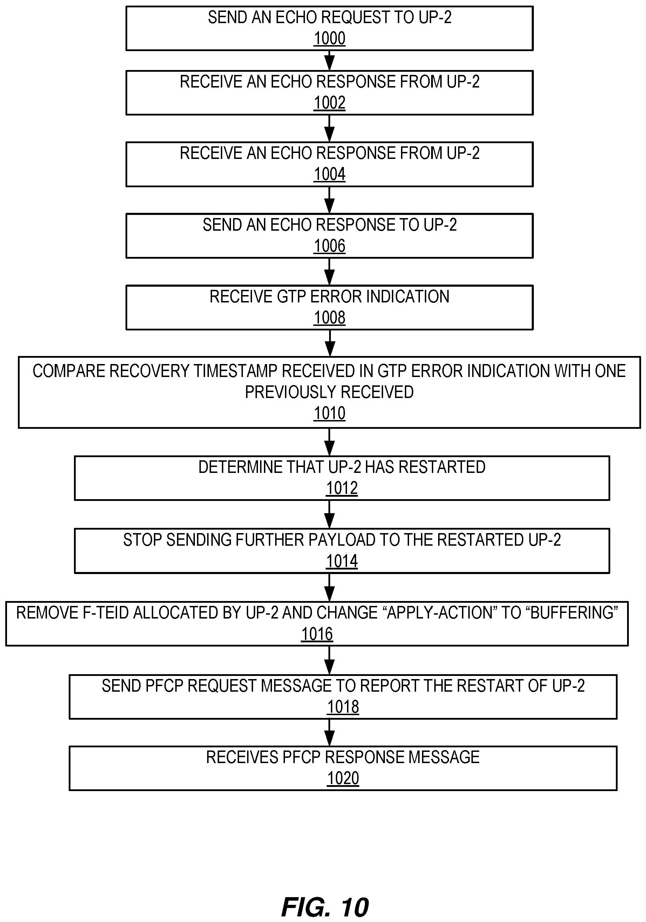

In one embodiment, the UP-1 802 may perform the following steps illustrated in **Figure 10**.

In step 1000, the UP-1 802 sends an Echo Request to the UP-2 804. Optionally, the Echo Request may comprise recovery timestamp.

In step 1002, the UP-1 802 receives an Echo Response from the UP-2 804.

In step 1004, the UP-1 802 receives an Echo Request from the UP-2 804.

In step 1006, the UP-1 802 sends an Echo Response to the UP-2 804. Up to this step, the UP-1 802 and the UP-2 804 have exchanged their recovery timestamps, so they will know any F-TEID allocated before a new recovery timestamp (due to a restart) become invalid. The above steps 1000 to 1006 are example steps of exchanging the Echo Requests / the Echo Responses between the UP-1 802 and UP-2 804. Thus, the time order of the steps 1000 to 1006 can be varied. For example, the steps 1004 and 1006 may occur before the steps 1000 and 1002.

In step 1008, the UP-1 802 receives a GTP error indication comprising a recovery timestamp.

In step 1010, the UP-1 802 compares the recovery timestamp received in the GTP error indication with the one previously received via the Echo Request, the Echo Response, or the GTP error indication.

In step 1012, the UP-1 802 determines that the UP-2 804 has restarted.

In step 1014, the UP-1 802 stops sending further payload to the restarted UP-2 804, for example, to avoid receiving further GTP error indications, and over-charge UE/PDU sessions affected by the restart of the UP-2 804.

In step 1016, the UP-1 802 removes the F-TEID allocated by the UP-2 804 and change "apply-action" to "Buffering" because the UP-1 802 does not send payloads anymore.

In step 1018, the UP-1 802 sends a PFCP request message to report the restart of the UP-2 804. Optionally, the PFCP request message is PFCP node report request message.

In step 1020, the UP-1 802 receives a PFCP response message.

### Figure 11

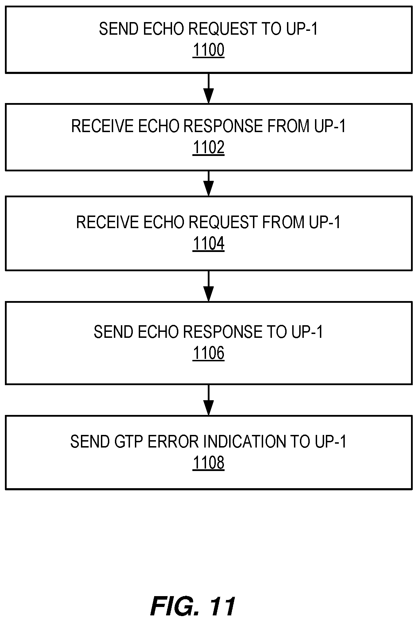

In one embodiment, the UP-2 804 may perform the following steps illustrated in **Figure 11**.

In step 1100, the UP-2 804 sends an Echo Request to the UP-1 802. Optionally, the Echo Request comprises a recovery timestamp.

In step 1102, the UP-2 804 receives an Echo Response from the UP-1 802.

In step 1104, the UP-2 804 receives an Echo Request from the UP-1 802.

In step 1106, the UP-2 804 sends an Echo Response to the UP-1 802. Up to this step, the UP-1 802 and the UP-2 804 have exchanged their recovery timestamps, so they will know any F-TEID allocated before a new recovery timestamp (due to a restart) become invalid. The above steps 1100 to 1106 are example steps of exchanging the Echo Requests / the Echo Responses between the UP-1 802 and UP-2 804. Thus, the time order of the steps 1100 to 1106 can be varied. For example, the steps 1104 and 1106 may occur before the steps 1100 and 1102.

In step 1108, the UP-2 804 sends a GTP error indication comprising a new recovery timestamp to the UP-1 802.

### Figure 12

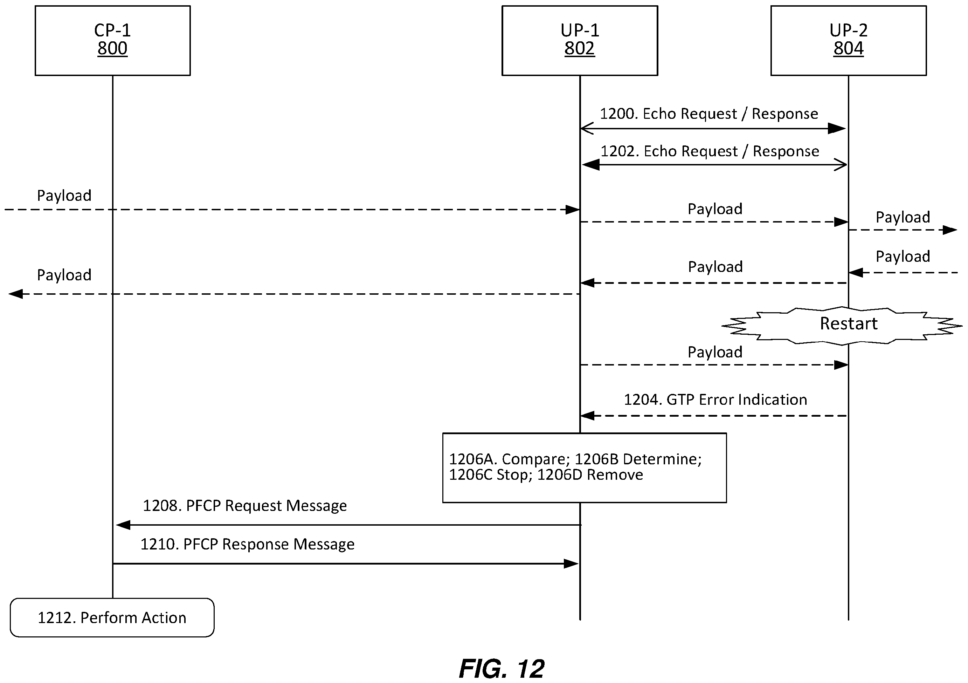

In one embodiment, the CP-1 800 may perform the following steps illustrated in **Figure 12**.

In step 1208, the CP-1 800 receives a Packet Forwarding Control Protocol (PFCP) request message from the UP-1 802, which comprises a report related to the UP-2 804 has restarted.

In step 1210, the CP-1 800 acknowledges the report by sending a PFCP response message to the UP-1 802.

In step 1212, the CP-1 800 performs an action based on an identity of the UP-2 804. If the identity of the UP-2 804 is a RAN or a NG-RAN node, the action is restoring user plane connection for affected PDU sessions. If the identity of the UP-2 804 is a PSA UDF or a PGW-U, the action is releasing affected PDU sessions.

In one embodiment, the UP-1 802 may perform the following steps illustrated in **Figure 12**.

In step 1200 and step 1202, the UP-1 802 exchanges Echo Requests and Echo Responses with the UP-2 804.

In step 1204, the UP-1 802 receives an GTP error indication containing a recovery timestamp;

In step 1206A, the UP-1 802 compares the recovery timestamp received in the GTP error indication with a recovery timestamp previously received via the Echo Request, the Echo Response or the GTP error indication.

In step 1206B, the UP-1 802 determines that the UP-2 804 has restarted.

In step 1206C, the UP-1 802 stops sending a further payload to the restarted UP-2 804.

In step 1206C, the UP-1 802 removes the F-TEID allocated by the UP-2 804 and change apply-action to Buffering.

In step 1208, the UP-1 802 sends the PFCP request message to report the restart of the UP-2 804.

In step 1210, the UP-1 802 receives the PFCP response message.

In one embodiment, the UP-2 804 may perform the following steps illustrated in Figure 12.

In step 1200 and step 1202, the UP-2 804 exchanges Echo Requests and Echo Responses with the UP-1 802.

In step 1204, the UP-2 804 sends an GTP error indication comprising a new recovery timestamp.

### 3GPP changes

The following exemplifies several 3GPP changes (in stage 3 specifications) to support the present disclosure. The texts (or Information Elements) in ***italicized bold*** font indicate newly suggested changes to the 3GPP standards.

The following clauses (7.2.2 and 7.3.1) of TS 29.281 are proposed to change in the portions indicated by the text (or Information Elements) in italicized bold font:

### Start of TS 29.281

### 7.2.2 Echo Response

The message shall be sent as a response to a received Echo Request.

The Restart Counter value in the Recovery information element shall not be used, i.e. it shall be set to zero by the sender and shall be ignored by the receiver. The Recovery information element is mandatory due to backwards compatibility reasons.

The optional Private Extension contains vendor or operator specific information.

**Table 7.2.2-1: Information Elements in an Echo Response**

| Information element | Presence requirement | Reference |
|---|---|---|
| Recovery | Mandatory | 8.2 |
| ***Recovery Timestamp*** | ***Optional*** | ***8.x*** |
| Private Extension | Optional | 8.6 |

### 7.3.1 Error Indication

When a GTP-U node receives a G-PDU for which no EPS Bearer context, PDP context, PDU Session, MBMS Bearer context, or RAB exists, the GTP-U node shall discard the G-PDU. If the TEID of the incoming G-PDU is different from the value 'all zeros' the GTP-U node shall also return a GTP error indication to the originating node. GTP entities may include the "UDP Port" extension header (Type 0x40), in order to simplify the implementation of mechanisms that can mitigate the risk of Denial-of-Service attacks in some scenarios.

Handling of the received Error Indication is specified in 3GPP TS 23.007 [3] and 3GPP TS 23.527 [33]. The information element Tunnel Endpoint Identifier Data I shall be the TEID fetched from the G-PDU that triggered this procedure.

The information element GTP-U Peer Address shall be the destination address (e.g., destination IP address, MBMS Bearer Context) fetched from the original user data message that triggered this procedure. A GTP-U Peer Address can be a GGSN, SGSN, RNC, PGW, SGW, ePDG, eNodeB, TWAN, MME, gNB, N3IWF, or UPF address. The TEID and GTP-U peer Address together uniquely identify the related PDP context, RAB, PDU session or EPS bearer in the receiving node. The optional Private Extension contains vendor or operator specific information.

**Table 7.3.1-1: Information Elements in an Error Indication**

| Information element | Presence requirement | Reference |
|---|---|---|
| Tunnel Endpoint Identifier Data I | Mandatory | 8.3 |
| GTP-U Peer Address | Mandatory | 8.4 |
| ***Recovery Timestamp*** | ***Optional*** | ***8.x*** |
| ***List of IP Addresses sharing the same Recovery Timestamp*** | ***Optional*** | ***8.y*** |
| Private Extension | *Optional* | 8.6 |

### End of TS 29.281

The following clauses of TS 29.244 are proposed to change in the portions indicated by the text (or Information Elements) in ***italicized bold*** font:

### Start of TS 29.244

### 7.4.5.1.1 General

The PFCP Node Report Request shall be sent over the Sxa, Sxb, Sxc and N4 interface by the UP function to report information to the CP function that is not specific to a PFCP session.

**Table 7.4.5.1.1-1: Information Elements in PFCP Node Report Request**

| Information elements | P | Condition / Comment | Appl. | | | | IE Type |
|---|---|---|---|---|---|---|---|
| | | | Sx a | Sx b | Sx c | N4 | |
| Node ID | M | This IE shall contain the unique identifier of the sending Node. | X | X | X | X | Node ID |
| Node Report Type | M | This IE shall indicate the type of the report. | X | X | X | X | Node Report Type |
| * | * | * | * | * | * | * | * |
| GTP-U Path QoS Report | C | This IE shall be present if the Node Report Type indicates a GTP-U Path QoS Report. More than one IE with this type may be included to represent multiple remote GTP-U peers for which QoS information is reported. | - | - | - | X | GTP-U Path QoS Report |
| ***Peer UP Restart Report*** | ***C*** | ***This IE shall be present if the Node Report Type Indicates a remote GTP-U entity has restarted.*** | ***X*** | ***X*** | - | ***X*** | ***Peer UP Restart Report*** |

### 7.4.5.1.X Peer UP Restart Report IE within PFCP Node Report Request

**Table 7.4.5.1.X-1: User Plane Path Recovery Report IE within PFCP Node Report Request**

| ***Octet 1 and 2*** | ***User Plane Path Recovery Report IE Type = 187 (decimal)*** | | | | | | |
|---|---|---|---|---|---|---|---|
| ***Octets 3 and 4*** | ***Length = n*** | | | | | | |
| ***Information elements*** | ***P*** | ***Condition* / *Comment*** | ***Appl.*** | | | | ***IE Type*** |
| | | | ***Sx a*** | ***Sx b*** | ***Sx c*** | ***N4*** | |
| ***Remote GTP-U Peer*** | ***M*** | ***This IE shall include the IP address of the remote GTP-U peer which has restarted.*** | ***X*** | ***X*** | - | ***X*** | ***Remote GTP-U Peer*** |
| | | ***More than one IE with this type may be included to represent multiple remote GTP-U peers which are affected by the restart.*** | | | | | |

### 8.2.69 Node Report Type

The Node Report Type IE shall be encoded as shown in Figure 8.2.69-1. It indicates the type of the node report the UP function sends to the CP function.

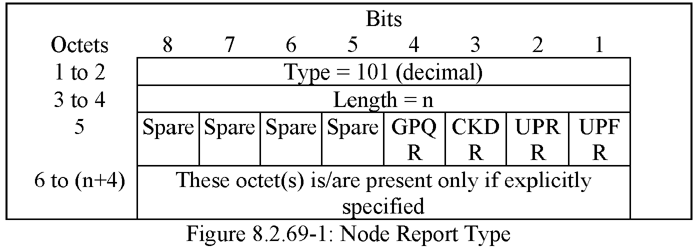

Octet 5 shall be encoded as follows:
- Bit 1 - UPFR (User Plane Path Failure Report): when set to "1", this indicates a User Plane Path Failure Report.
- Bit 2 - UPRR (User Plane Path Recovery Report): when set to "1", this indicates a User Plane Path Recovery Report.

Bit 3 - CKDR (Clock Drift Report): when set to " 1", this indicates a Clock Drift Report.
- Bit 4 - GPQR (GTP-U Path QoS Report): when set to "1", this indicates a GTP-U Path QoS Report.
- ***Bit 5- PURR (peer GTP-U entity Restart Report): when set to "1", this indicates a Peer GTP-U Restart report.***
- Bit 6 to 8 - Spare, for future use and set to "0".

At least one bit shall be set to "1". Several bits may be set to "1".

NOTE: If both UPFR and UPRR bits are set to "1", the Remote GTP-U Peer IEs in the User Plane Path Failure Report IE and in the User Plane Path Recovery Report IE are different.

***The CP function and UP function needs to indicate their Support of this new feature (as described above) via CP function feature and UP function feature.***

### 8.2.58 CP Function Features

The CP Function Features IE indicates the features supported by the CP function. Only features having an impact on the (system-wide) UP function behaviour are signalled in this IE. It is coded as depicted in Figure 8.2.58-1.

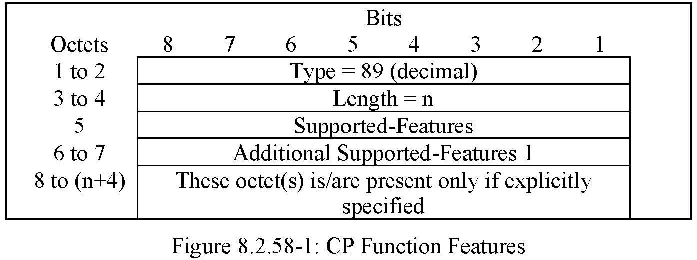

The CP Function Features IE takes the form of a bitmask where each bit set indicates that the corresponding feature is supported. Spare bits shall be ignored by the receiver. The same bitmask is defined for all PFCP interfaces.

The following table specifies the features defined on PFCP interfaces and the interfaces on which they apply.

**Table 8.2.58-1: CP Function Features**

| Feature Octet / Bit | Feature | Interface | M/O | Description |
|---|---|---|---|---|
| 5/1 | LOAD | Sxa, Sxb, Sxc, N4 | O | Load Control is supported by the CP function. |
| 5/2 | OVRL | Sxa, Sxb, Sxc, N4 | O | Overload Control is supported by the CP function. |
| * | * | * | * | * |
| 6/x | PSUCC | Sxb, Sxc, N4 | O | CP function supports PFCP session establishment or modification with Partial Success, i.e. with UP function reporting rules that cannot be activated. See clause 5.2.9. |
| ***6*/*x*** | ***RPURR*** | ***Sxb, Sxc, N4*** | ***O*** | ***CP function supports Receiving the Peer UP Restart Report.*** |

### 8.2.25 UP Function Features

The UP Function Features IE indicates the features supported by the UP function. It is coded as depicted in Figure 8.2.25-1.

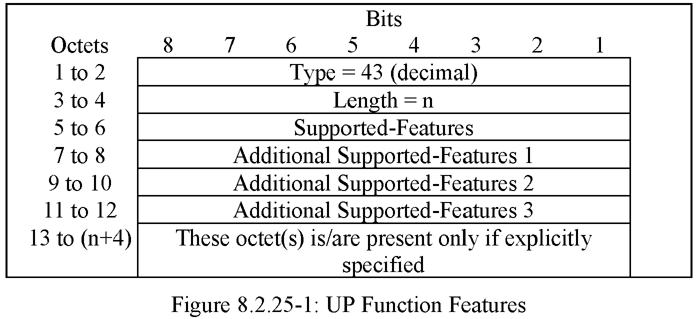

The UP Function Features IE takes the form of a bitmask where each bit set indicates that the corresponding feature is supported. Spare bits shall be ignored by the receiver. The same bitmask is defined for all PFCP interfaces.

The following table specifies the features defined on PFCP interfaces and the interfaces on which they apply.

**Table 8.2.25-1: UP Function Features**

| Feature Octet / Bit | Feature | Interface | M/O | Description |
|---|---|---|---|---|
| 5/1 | BUCP | Sxa, N4 | O (NOTE 2) | Downlink Data Buffering in CP function is supported by the UP function. |
| 5/2 | DDND | Sxa, N4 | O | The buffering parameter 'Downlink Data Notification Delay' is supported by the UP function. |
| * | * | * | * | * |
| 11/1 | DRQOS | N4 | O | UP function supports Direct Reporting of QoS monitoring events to Local NEF or AF (see clause 5.33.5). |
| ***6*/*x*** | ***SPURR*** | ***Sxb, Sxc, N4*** | ***O*** | ***UPfunction supports Sending of Peer UP Restart Report.*** |

### End of TS 29.244

### Figure 13

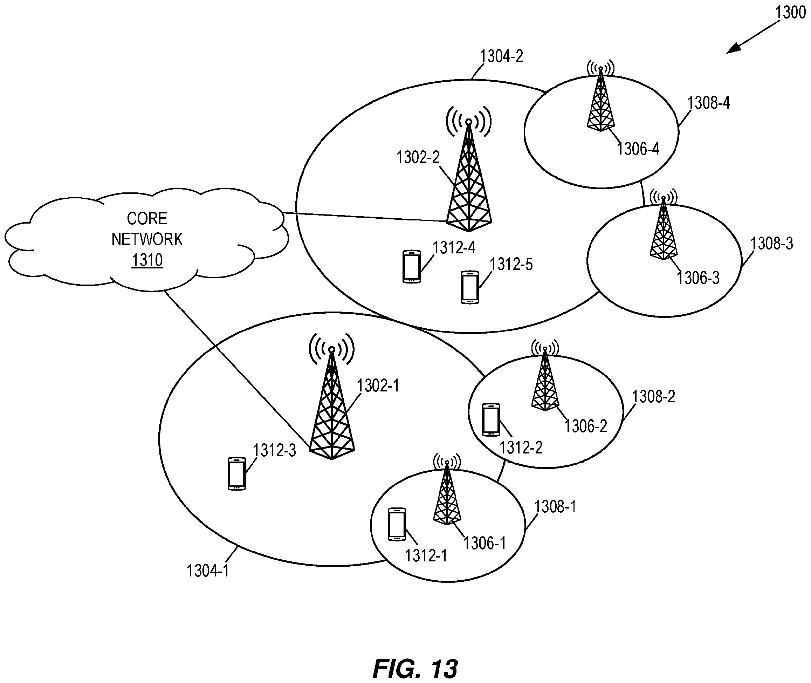

**Figure 13** illustrates one example of a cellular communications system 1300 in which embodiments of the present disclosure may be implemented. In the embodiments described herein, the cellular communications system 1300 is a 5G system (5GS) including a Next Generation RAN (NG-RAN) and a 5G Core (5GC). In this example, the RAN includes base stations 1302-1 and 1302-2, which in the 5GS include NR base stations (gNBs) and optionally next generation eNBs (ng-eNBs) (e.g., LTE RAN nodes connected to the 5GC) and in the EPS include eNBs, controlling corresponding (macro) cells 1304-1 and 1304-2. The base stations 1302-1 and 1302-2 are generally referred to herein collectively as base stations 1302 and individually as base station 1302. Likewise, the (macro) cells 1304-1 and 1304-2 are generally referred to herein collectively as (macro) cells 1304 and individually as (macro) cell 1304. The RAN may also include a number of low power nodes 1306-1 through 1306-4 controlling corresponding small cells 1308-1 through 1308-4. The low power nodes 1306-1 through 1306-4 can be small base stations (such as pico or femto base stations) or RRHs, or the like. Notably, while not illustrated, one or more of the small cells 1308-1 through 1308-4 may alternatively be provided by the base stations 1302. The low power nodes 1306-1 through 1306-4 are generally referred to herein collectively as low power nodes 1306 and individually as low power node 1306. Likewise, the small cells 1308-1 through 1308-4 are generally referred to herein collectively as small cells 1308 and individually as small cell 1308. The cellular communications system 1300 also includes a core network 1310, which in the 5G System (5GS) is referred to as the 5GC. The base stations 1302 (and optionally the low power nodes 1306) are connected to the core network 1310.

The base stations 1302 and the low power nodes 1306 provide service to wireless communication devices 1312-1 through 1312-5 in the corresponding cells 1304 and 1308. The wireless communication devices 1312-1 through 1312-5 are generally referred to herein collectively as wireless communication devices 1312 and individually as wireless communication device 1312. In the following description, the wireless communication devices 1312 are oftentimes UEs, but the present disclosure is not limited thereto.

### Figure 14

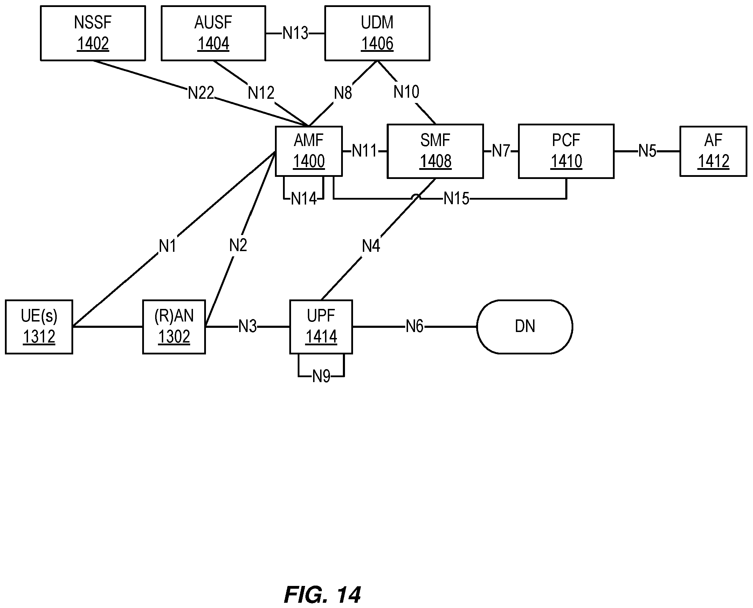

**Figure 14** illustrates a wireless communication system represented as a 5G network architecture composed of core Network Functions (NFs), where interaction between any two NFs is represented by a point-to-point reference point/interface. Figure 14 can be viewed as one particular implementation of the system 1300 of Figure 13.

Seen from the access side the 5G network architecture shown in Figure 14 comprises a plurality of UEs 1312 connected to either a RAN 1302 or an Access Network (AN) as well as an AMF 1400. Typically, the R(AN) 1302 comprises base stations, e.g. such as eNBs or gNBs or similar. Seen from the core network side, the 5GC NFs shown in Figure 14 include a NSSF 1402, an AUSF 1404, a UDM 1406, the AMF 1400, a SMF 1408, a PCF 1410, and an Application Function (AF) 1412.

Reference point representations of the 5G network architecture are used to develop detailed call flows in the normative standardization. The N1 reference point is defined to carry signaling between the UE 1312 and AMF 1400. The reference points for connecting between the AN 1302 and AMF 1400 and between the AN 1302 and UPF 1414 are defined as N2 and N3, respectively. There is a reference point, N11, between the AMF 1400 and SMF 1408, which implies that the SMF 1408 is at least partly controlled by the AMF 1400. N4 is used by the SMF 1408 and UPF 1414 so that the UPF 1414 can be set using the control signal generated by the SMF 1408, and the UPF 1414 can report its state to the SMF 1408. N9 is the reference point for the connection between different UPFs 1414, and N14 is the reference point connecting between different AMFs 1400, respectively. N15 and N7 are defined since the PCF 1410 applies policy to the AMF 1400 and SMF 1408, respectively. N12 is required for the AMF 1400 to perform authentication of the UE 1312. N8 and N10 are defined because the subscription data of the UE 1312 is required for the AMF 1400 and SMF 1408.

The 5GC network aims at separating UP and CP. The UP carries user traffic while the CP carries signaling in the network. In Figure 14, the UPF 1414 is in the UP and all other NFs, i.e., the AMF 1400, SMF 1408, PCF 1410, AF 1412, NSSF 1402, AUSF 1404, and UDM 1406, are in the CP. Separating the UP and CP guarantees each plane resource to be scaled independently. It also allows UPFs to be deployed separately from CP functions in a distributed fashion. In this architecture, UPFs may be deployed very close to UEs to shorten the Round Trip Time (RTT) between UEs and data network for some applications requiring low latency.

The core 5G network architecture is composed of modularized functions. For example, the AMF 1400 and SMF 1408 are independent functions in the CP. Separated AMF 1400 and SMF 1408 allow independent evolution and scaling. Other CP functions like the PCF 1410 and AUSF 1404 can be separated as shown in Figure 14. Modularized function design enables the 5GC network to support various services flexibly.

Each NF interacts with another NF directly. It is possible to use intermediate functions to route messages from one NF to another NF. In the CP, a set of interactions between two NFs is defined as service so that its reuse is possible. This service enables support for modularity. The UP supports interactions such as forwarding operations between different UPFs.

### Figure 15

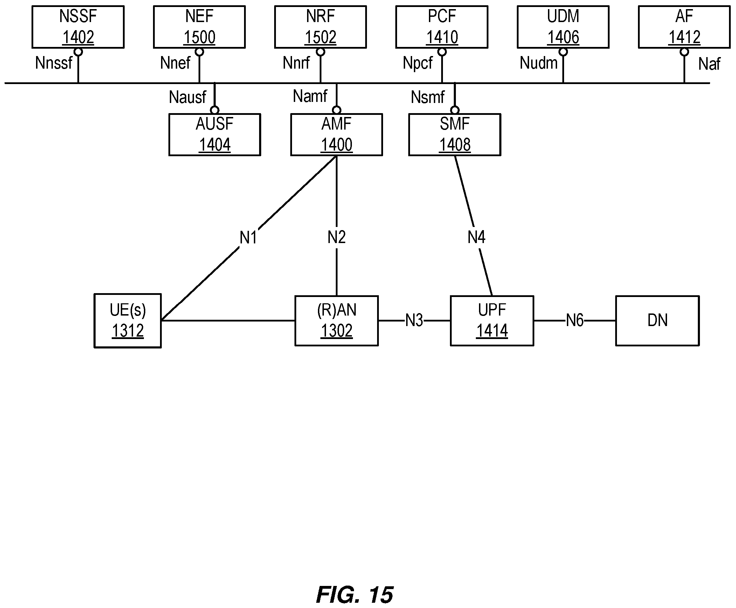

**Figure 15** illustrates a 5G network architecture using service-based interfaces between the NFs in the CP, instead of the point-to-point reference points/interfaces used in the 5G network architecture of Figure 14. However, the NFs described above with reference to Figure 14 correspond to the NFs shown in Figure 15. The service(s) etc. that a NF provides to other authorized NFs can be exposed to the authorized NFs through the service-based interface. In Figure 15 the service based interfaces are indicated by the letter "N" followed by the name of the NF, e.g. Namf for the service based interface of the AMF 1400 and Nsmf for the service based interface of the SMF 1408, etc. The NEF 1500 and the NRF 1502 in Figure 15 are not shown in Figure 14 discussed above. However, it should be clarified that all NFs depicted in Figure 14 can interact with the NEF 1500 and the NRF 1502 of Figure 15 as necessary, though not explicitly indicated in Figure 14.

Some properties of the NFs shown in Figures 14 and 15 may be described in the following manner. The AMF 1400 provides UE-based authentication, authorization, mobility management, etc. A UE 1312 even using multiple access technologies is basically connected to a single AMF 1400 because the AMF 1400 is independent of the access technologies. The SMF 1408 is responsible for session management and allocates Internet Protocol (IP) addresses to UEs. It also selects and controls the UPF 1414 for data transfer. If a UE 1312 has multiple sessions, different SMFs 1408 may be allocated to each session to manage them individually and possibly provide different functionalities per session. The AF 1412 provides information on the packet flow to the PCF 1410 responsible for policy control in order to support QoS. Based on the information, the PCF 1410 determines policies about mobility and session management to make the AMF 1400 and SMF 1408 operate properly. The AUSF 1404 supports authentication function for UEs or similar and thus stores data for authentication of UEs or similar while the UDM 1406 stores subscription data of the UE 1312. The Data Network (DN), not part of the 5GC network, provides Internet access or operator services and similar.

An NF may be implemented either as a network element on a dedicated hardware, as a software instance running on a dedicated hardware, or as a virtualized function instantiated on an appropriate platform, e.g., a cloud infrastructure.

### Figure 16

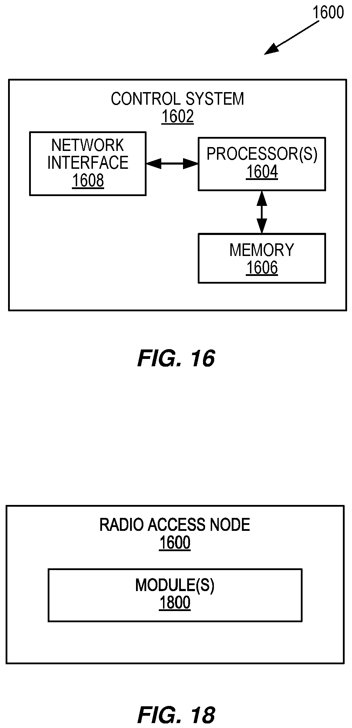

**Figure 16** is a schematic block diagram of a network node 1600 according to some embodiments of the present disclosure. Optional features are represented by dashed boxes. The network node 1600 may be, for example, a core network node that implements a NF (e.g., AMF 1400, SMF 1408, or NSACF 1504) or a network node that implements all or part of the functionality of an NF (e.g., all or part of the functionality of the AMF 1400, the SMF 1408, or the NSACF 1504 described herein). As illustrated, the network node 1600 includes a one or more processors 1604 (e.g., Central Processing Units (CPUs), Application Specific Integrated Circuits (ASICs), Field Programmable Gate Arrays (FPGAs), and/or the like), memory 1606, and a network interface 1608. The one or more processors 1604 are also referred to herein as processing circuitry. The one or more processors 1604 operate to provide one or more functions of the network node 1600 as described herein (e.g., one or more functions of the AMF 1400, the SMF 1408, or the NSACF 1504 described herein). In some embodiments, the function(s) are implemented in software that is stored, e.g., in the memory 1606 and executed by the one or more processors 1604. Examples of the network node 1600 may include the CP-1 800, the UP-1 802, and the UP-2 804 in Figure 8.

### Figure 17

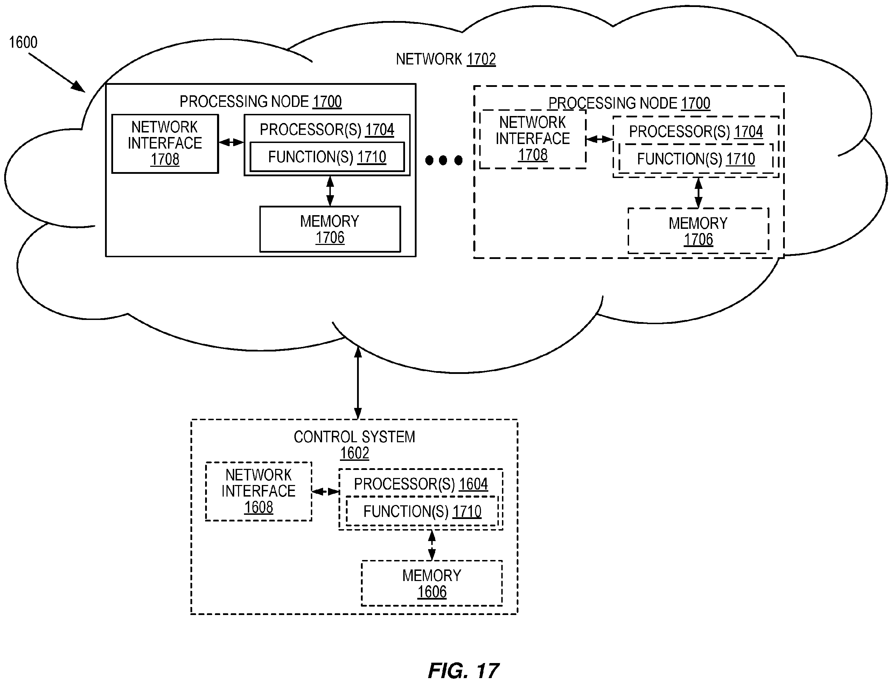

**Figure 17** is a schematic block diagram that illustrates a virtualized embodiment of the network node 1600 according to some embodiments of the present disclosure. Again, optional features are represented by dashed boxes. As used herein, a "virtualized" network node is an implementation of the network node 1600 in which at least a portion of the functionality of the network node 1600 is implemented as a virtual component(s) (e.g., via a virtual machine(s) executing on a physical processing node(s) in a network(s)). As illustrated, in this example, the network node 1600 includes one or more processing nodes 1700 coupled to or included as part of a network(s) 1702. Each processing node 1700 includes one or more processors 1704 (e.g., CPUs, ASICs, FPGAs, and/or the like), memory 1706, and a network interface 1708. In this example, functions 1710 of the network node 1600 described herein (e.g., one or more functions of the AMF 1400, the SMF 1408, or the NSACF 1504 described herein) are implemented at the one or more processing nodes 1700 or distributed across the two or more processing nodes 1700 in any desired manner. In some particular embodiments, some or all of the functions 1710 of the network node 1600 described herein are implemented as virtual components executed by one or more virtual machines implemented in a virtual environment(s) hosted by the processing node(s) 1700.

In some embodiments, a computer program including instructions which, when executed by at least one processor, causes the at least one processor to carry out the functionality of the network node 1600 or a node (e.g., a processing node 1700) implementing one or more of the functions 1710 of the network node 1600 in a virtual environment according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

### Figure 18

**Figure 18** is a schematic block diagram of the network node 1600 according to some other embodiments of the present disclosure. The network node 1600 includes one or more modules 1800, each of which is implemented in software. The module(s) 1800 provide the functionality of the network node 1600 described herein. This discussion is equally applicable to the processing node 1700 of Figure 17 where the modules 1800 may be implemented at one of the processing nodes 1700 or distributed across multiple processing nodes 1700.

Although the computing devices described herein (e.g., UEs, network nodes, hosts) may include the illustrated combination of hardware components, other embodiments may comprise computing devices with different combinations of components. It is to be understood that these computing devices may comprise any suitable combination of hardware and/or software needed to perform the tasks, features, functions, and methods disclosed herein. Determining, calculating, obtaining, or similar operations described herein may be performed by processing circuitry, which may process information by, for example, converting the obtained information into other information, comparing the obtained information or converted information to information stored in the network node, and/or performing one or more operations based on the obtained information or converted information, and as a result of said processing making a determination. Moreover, while components are depicted as single boxes located within a larger box or nested within multiple boxes, in practice computing devices may comprise multiple different physical components that make up a single illustrated component, and functionality may be partitioned between separate components. For example, a communication interface may be configured to include any of the components described herein, and/or the functionality of the components may be partitioned between the processing circuitry and the communication interface. In another example, non-computationally intensive functions of any of such components may be implemented in software or firmware and computationally intensive functions may be implemented in hardware.

In certain embodiments, some or all of the functionality described herein may be provided by processing circuitry executing instructions stored in memory, which in certain embodiments may be a computer program product in the form of a non-transitory computer-readable storage medium. In alternative embodiments, some or all of the functionality may be provided by the processing circuitry without executing instructions stored on a separate or discrete device-readable storage medium, such as in a hardwired manner. In any of those particular embodiments, whether executing instructions stored on a non-transitory computer-readable storage medium or not, the processing circuitry can be configured to perform the described functionality. The benefits provided by such functionality are not limited to the processing circuitry alone or to other components of the computing device, but are enjoyed by the computing device as a whole and/or by end users and a wireless network generally.

### ABBREVIATIONS

At least some of the following abbreviations may be used in this disclosure. If there is an inconsistency between abbreviations, preference should be given to how it is used above. If listed multiple times below, the first listing should be preferred over any subsequent listing(s).
- 2G: Second Generation
- 3G: Third Generation
- 3GPP: Third Generation Partnership Project
- 4G: Fourth Generation
- 5G: Fifth Generation
- 5GS: Fifth Generation System
- 6G: Sixth Generation
- AMF: Access and Mobility Management Function
- AP: Access Point
- BS: Base Station
- BSC: Base Station Controller
- BTS: Base Transceiver Station
- DL: Downlink
- eNB: evolved Node B
- E-UTRA: Evolved Universal Terrestrial Radio Access
- E-UTRAN: Evolved Universal Mobile Telecommunications System Terrestrial Radio Access Network
- F-TEID: Fully qualified Tunnel Endpoint Identifier
- gNB: NR Node B
- GPRS: General Packet Radio Service
- GSM: Global System for Mobile Communications
- GTP: General Packet Radio Service Tunnelling Protocol
- HSS: Home Subscriber Server
- loT: Internet of Things
- I-UPF: Intermediate User Plane Function
- LTE: Long Term Evolution
- MME: Mobility Management Entity
- MSC: Mobile Switching Center
- MTC: Machine Type Communication
- NEF: Network Exposure Function
- NFV: Network Function Virtualization
- NR: New Radio
- O&M: Operation and Maintenance
- OSS: Operations Support System
- OTT: Over-The-Top
- PDN: Packet Data Network
- PDU: Protocol Data Unit
- PFCP: Packet Forwarding Control Protocol
- PGW: Packet Gateway
- PGW-C: Packet Data Network (PDN) Gateway Control plane function
- PLMN: Public Land Mobile Network
- RAN: Radio Access Network
- RAT: Radio Access Technology
- RNC: Radio Network Controller
- SGW: Serving Gateway
- SGW-C: Serving Gateway Control plane function
- SMF: Session Management Function
- TCP/IP: Transmission Control Protocol/Internet Protocol
- UE: User Equipment
- UL: Uplink
- UMTS: Universal Mobile Telecommunications System
- UPF: User Plane Function
- USIM: Universal Subscriber Identity Module
- WCDMA: Wideband Code Division Multiplexing Access
- WLAN: Wide Local Area Network

### APPENDIX 1

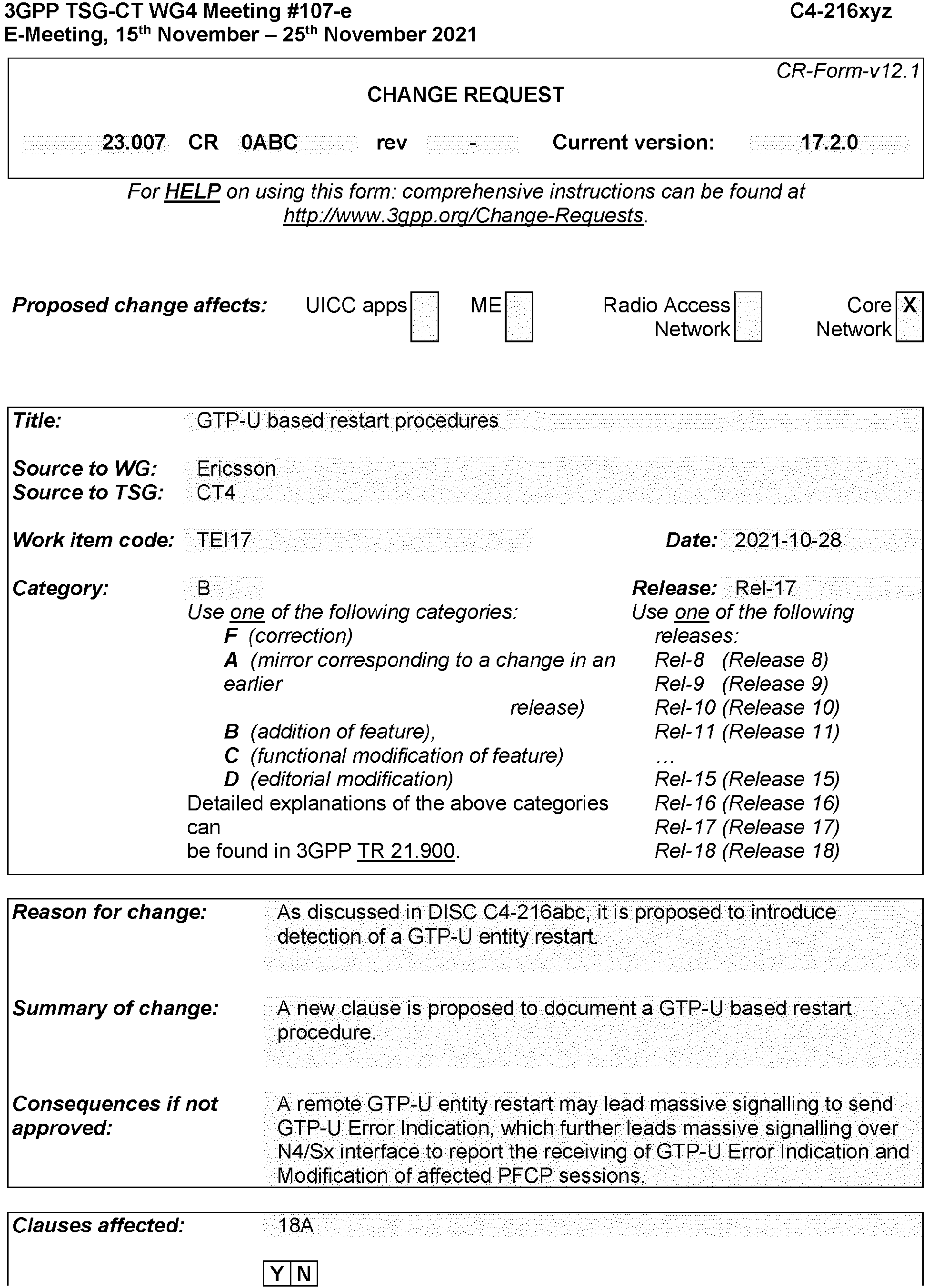

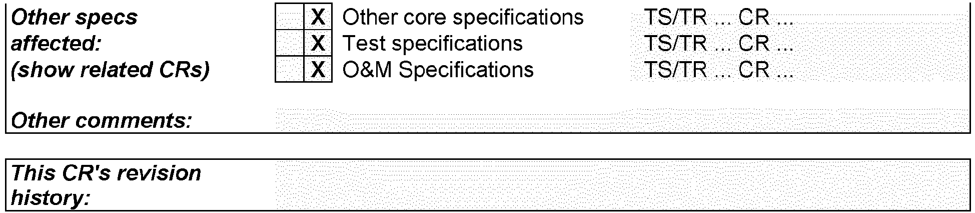

### * * * First Change * * * *

### 18A GTP-U based restart procedures

Across GTP-U based interfaces, i.e. the S1-U, S11-U, S2a, S2b, X2, S4, S5, S8, S12, M1 and Sn interfaces of the Evolved Packet System in EPS, and the F1-U, Xn, N3, N9, N19, N3mb and N19mb interfaces of the 5G System in 5GS, a GTP-U entity may utilize GTP-U Echo Request and Echo Response messages or GTP-U Error Indication message containing the Recovery Time Stamp Information Element to detect and handle a restart.

A GTP-U entity shall be prepared to receive an Echo Request message at any time (even from unknown peers), and it shall reply with an Echo Response message.

A GTP-U entity shall maintain two Recovery Time Stamps:
- in volatile memory a remote Recovery Time Stamp of a peer GTP-U entity with which the entity is in contact;
- in non-volatile memory own, or local Recovery Time Stamp that was sent to a peer GTP-U entity.

After a GTP-U entity has (re)started, it shall immediately update all local Recovery Time Stamps and shall clear all remote Recovery Time Stamps. When peer GTP-U entities information is available, e.g. when the first GTP-U tunnel towards the peer GTP-U entity is to be established, the (re)started GTP-U entity may send its (updated) Recovery Time Stamps in an Echo Request message to the peer GTP-U entity before sending GTP-U packets.

A GTP-U entity may have a common local Recovery Time Stamp for all peer GTP-U entities, or it may have a separate local Recovery Time Stamp for each peer GTP-U entity.

A GTP-U entity may probe the liveliness of each peer GTP-U entity with which it is in contact by sending an Echo Request message.

The Recovery Time Stamp signalled in the GTP-U Echo Request and Response messages is associated with the GTP-U entity identified by the source IP address of the message.

The Recovery Time Stamp signalled in the GTP-U Error Indication is associated with the source IP address of the GTP-U Error Indication or associated with a list of IP address(es) which are sharing the same Recovery Time Stamp if those IP address(es) explicitly included in the GTP-U Error Indication message.

The GTP-U entity that receives a Recovery Time Stamp Information Element from a peer GTP-U entity shall compare the received remote Recovery Time Stamp value with the previous Recovery Time Stamp value stored for that peer GTP-U entity.
- If no previous value was stored, the Recovery Time Stamp value received in the Echo Request or Response messages or the GTP Error Indication message shall be stored for the peer GTP-U entity.
- If the value of a Recovery Time Stamp previously stored for a peer GTP-U entity is smaller than the Recovery Time Stamp received in the Echo Request or Response messages or the GTP-U Error Indication messages, this indicates that the entity that sent the Echo Request or Response messages or the GTP-U Error Indication messages has restarted. The received, new Recovery Time Stamp value shall be stored by the receiving entity, replacing the value previously stored for the peer GTP-U entity.
- If the value of a Recovery Time Stamp previously stored for a peer GTP-U entity is larger than the Recovery Time Stamp value received in the Echo Request or Response messages or the GTP-U Error Indication messages, this indicates a possible race condition (newer message arriving before the older one). The received new Recovery Time Stamp value shall be discarded and an error may be logged.

Based on operator's policy, when a Recovery Time Stamp IE is received in an Echo Request from a peer GTP-U entity, with a Recovery Time Stamp larger than the value of the Recovery Time Stamp previously stored for the peer GTP-U entity, the GTP-U entity may verify whether the peer GTP-U entity has really restarted by:
- sending one or more Echo Request message(s) towards the peer GTP-U entity, or by monitoring GTP-U Error Indication messages which includes a Recovery Time Stamp IE from the peer GTP-U entity; and
- determining that the peer GTP-U entity has restarted if the Recovery Time Stamp in the Echo Response message or in the GTP-U Error Indication messages is larger than the value of the Recovery Time Stamp previously stored for the peer GTP-U entity.

### *** End of Changes * * * *

### APPENDIX 2

| | | |
|---|---|---|
| **3GPP TSG-CT WG4 Meeting #107-e** | | **C4-216abc** |
| **E-Meeting, 15^{th} November - 25^{th} November 2021** | | |
| **Source:** | **Ericsson** | |
| **Title:** | **Discussion on detecting and reporting a GTP-U entity restart** | |
| **Release:** | **Rel-17** | |
| **Agenda item:** | **6.3.2** | |
| **Document for:** | **Decision** | |

### 1. Introduction

The paper is to provide an analysis on a GTP-U entity restart and also propose to introduce enhancements to detect and reporting of such GTP-U entity restart in an efficient way.

### 2. Description

### 2.1 Detection of a GTP-U restart

About 20 years ago, 3GPP has decided to remove the usage of **Recovery** from the GTP Echo Response message for user plane (GTP-U), where the Recovery is defined as the restart counter for a GTP entity, since at that time, a GTP entity comprises a Control plane part and user plane part, it is redundant to communicate the restart counter for a GTP entity via both the control plane signalling path and user plane payload path.

The usage of the "Restart counter" field in the "Recovery" information element in GTP-U messages was changed in March 2000 through 3GPP TS 29.060 Rel-3 CR 096 [7], which was written on 3GPP TS 29.060 V3.4.0 [5] and was implemented in 3GPP TS 29.060 V3.5.0 [6]. The "Reason for change" in the CR reads as follows:
*Restart counter in the Echo response message is used to inform the peer node that a node has experienced a restart. It is unnecessary to use the Restart counter value in both GTP-U and GTP-C, since it is sufficient to use it only in GTP-C. Moreover, at Iu interface RANAP already has a procedure for node restarts.*
*Therefore it is proposed that the Restart counter value in the Echo Response message is not used in GTP-U.*
*The CR also proposes some clarifications how to react when Echo response is received.*

Before 3GPP Rel-8, the normative specification of GTP-U was included together with GTPv1 in 3GPP TS 29.060. In 3GPP Rel-8, the normative specification of GTP-U was moved from 3GPP TS 29.060 to 3GPP TS 29.281 [3]. The text on GTP-U was, in fact, left "as was" in 3GPP TS 29.060 [4] and a note was added at the beginning of clause 9 in the specification. The note reads as follows:
From release 8 onwards, the normative specification of the user plane of GTP version 1 is 3GPP TS 29.281 [41]. All provisions about GTPv1 user plane in the present document shall be superseded by 3GPP TS 29.281 [41].

So as specified in TS 29.281 [3], clause 7.2.2:
*The Restart Counter value in **the Recovery information element shall not be used, i.e. it shall be set to zero by the sender and shall be ignored by the receiver.** The Recovery information element is mandatory due to backwards compatibility reasons.*
*The optional Private Extension contains vendor or operator specific information.*

**Table 7.2.2-1: Information Elements in an Echo Response**

| ***Information element*** | ***Presence requirement*** | ***Reference*** |
|---|---|---|
| *Recovery* | *Mandatory* | *8.2* |
| *Private Extension* | *Optional* | *8.6* |

**Conclusion 1: the motivation as described in the "Reason for change" in the CR to disable the detection of GTP-U entity restart is NOT valid any longer in the context of CUPS, where Control plane function and User plane function are separated since Rel-14. CP function and UP function have to maintain their own restart counter/recovery timestamp, as specified in clause 19a in 3GPP TS 23.007.**

**Conclusion 2: There is no mechanism since then to enable a User Plane function to detect the peer GTP-U entity has restarted.** Consequently, there is no requirement on the peer GTP-U restart.

### 2.2 Issues when a remote GTP-U entity has restarted

3GPP has specified relevant requirements for user plane path failure (GTP-U path failure) in 3GPP TS 23.007, clause 20.3 and 3GPP TS 23.527, clause 5.4. See below:

### 20.3.1 General

*GTP-U entities shall support detection of path failure by using Echo Request* / *Echo Response messages in the following way. **A path counter shall be reset each time an Echo Response is received on the path and incremented when the T3-RESPONSE timer expires for any Echo Request message sent on the path. The path shall be considered to be down if the counter exceeds N3-REQUESTS.***

*Upon detecting a path failure, the network node should notify the failure via the Operation and Maintenance system and may either*
- *delete the bearer contexts associated with the path in failure; or*
- *maintain the bearer contexts associated with the path in failure during an operator **configurable maximum path failure duration.** The network node shall delete the maintained resources if the path is still down when this duration expires.*

The (operator configurable maximum) path failure timer is NORMALLY much larger than the recovery time of a GTP-U entity, i.e., before the path failure can be detected, the GTP-U entity has most likely recovered from its restart.

Therefore, the mechanism which is used during a GTP-U path failure, e.g., where the UP function is possible to use a single PFCP Node Report Request message to report GTP-U path failure, **can't be used for the remote GTP-U entity restart**.

When a GTP-U entity restarts, for example, a gNB has restarted, it will lose all its GTP-U contexts, after it recovers from the restart and it receives DL packets, the gNB is not able to find corresponding contexts for the DL GTP-U packets from (I/V-)UPF, so it just sends a GTP Error Indication for an unknown DL GTP-U packet.

So, a gNB which has just recovered from its restart will send massive amounts of GTP Error Indication messages to the (I/V-)UPF, which in turn leads to massive amounts of signalling over Sx/N4 interface since the UP function has to report the receiving of GTP Error Indication to the CP function (e.g. (I/V-)SMF; even worse, the CP function needs subsequently to trigger PFCP Session Modification procedure for each of affected PFCP sessions to update the DL Forwarding Action Rule which contains the DL TEID associated with the restarted gNB, i.e. to remove the DL F-TEID (which was allocated by the restarted gNB) and change Apply-Action to "BUFF". (see the signalling flow as below as specified in 5.3.2.1 of 3GPP TS 23.527, where step 3 and step 4 should be optimized.)

The gNB is an example here, any GTP-U entity will apply the same behaviour when it restarts and its contexts on the user plane can't be restored, e.g. by the corresponding control plane.

NOTE that, if the user plane contexts can be restored by a control plane function, the UP function will be required to not send GTP Error Indication for a period of time, e.g. for an intermediate UPF restart.

### 5.3.2.1 Principles

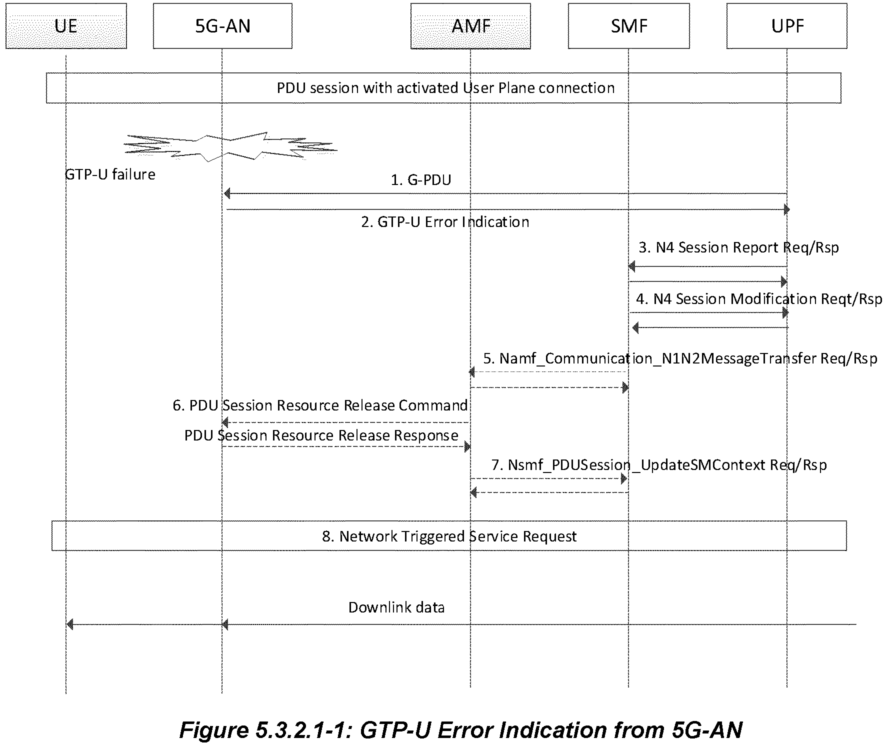

*1. The user plane connection of an existing PDU session is activated. Downlink G-PDUs are sent towards the 5G-AN.*
*2. The 5G-AN returns a GTP-U Error Indication if it does not have a corresponding GTP-U context (see clause 5.2).*
***3. Upon receipt of a GTP-U Error Indication, the UPF shall identify the related PFCP session and send an Error Indication Report to the SMF, as specified in clause 5.10 of 3GPP TS 29.244 [4].***
***4. For a GTP- U Error Indication received from a 5G-AN, the SMF shall modify the PFCP session to instruct the UPF to buffer downlink packets.***

**Conclusion 3: A restarted GTP-U entity, if its GTP-U contexts can't be restored, e.g. by the control plane, will send massive amount of GTP Error Indication messages for the unknown incoming GTP-U packets to the peer User Plane function sending those GTP-U packets; and receiving those GTP Error Indication message leads further massive signalling over Sx/N4 interface. Such massive signalling over GTP-U interface and Sx/N4 interface should be avoided.**

### 3. Proposal

It is proposed to introduce detection of a GTP-U entity restart over GTP-U interface and report such GTP-U entity restart using PFCP Node Report procedure, like GTP-U path failure reporting, to avoid PFCP Session Modification procedure.

C4-216xyz starts with a stage 2 CR describing detection of a GTP-U entity restart.

## Claims

1. A method performed by a Control Plane function, CP, function (800), in a telecommunication network (1302) to manage a restart of a second User Plane, UP, function (804) in a user plane path for Protocol Data Unit, PDU, sessions that the CP function (800) is managing, the method comprises:
• receiving (816) a Packet Forwarding Control Protocol, PFCP, Node Report Request message from a first UP function (802) comprising a report related to a restart of the second UP function (804), where the PFCP Node Report request message indicates:
(1) that the second UP function (804) has restarted and GTP-U context associated with the list of IP addresses have been lost; and
(2) that the CP function (800) needs not to send a PFCP Session Modification Request message to change DL FAR per a PFCP session;
• sending (818), as a response to the PFCP Node Report Request message, a PFCP Node report Response message that comprises an acknowledgment that the Downlink FAR in all affected PFCP sessions associated with the restarted second UP function (804) has been updated with apply-action set to buffering, and remote F-TEID from the second UP function (804) has been removed; and
• releasing (820) PDU sessions affected by the remote GTP-U restart based on a local configuration.

2. A method performed by a first User Plane, UP, function (802) communicating with a Control Plane, CP, function (800) and a second UP function (804) in a telecommunication network (1302) for managing a restart of the second UP function (804), the method comprising:
• receiving (814) an GTP error indication containing a recovery timestamp and list of IP addresses affected by a restart of the second UP function (804) to indicate that all GTP-U context associated with these IP addresses have been lost;
• sending (816) a Packet Forwarding Control Protocol, PFCP, Node Report request message to a Control Plane, CP, function (800) to report the restart of the second UP function (804), where the PFCP Node Report request message indicates:
(1) that the second UP function (804) has restarted and GTP-U context associated with the list of IP addresses have been lost; and
(2) that the CP function (800) needs not to send a PFCP Session Modification Request message to change DL FAR per a PFCP session; and
• receiving (818) a PFCP Node Report response message.

3. The method of claim 2 wherein the UP-1 (802) is implemented in one or more of (a) New Radio, NR, Node B, gNB, (b) evolved Node B, eNB, (c) Serving Gateway Control plane function, SGW-U, (d) Packet Data Network, PDN, Gateway Control plane function, PGW-U, (e) Intermediate User Plane Function, I-UPF, (f) Visiting User Plane Function, V-UPF, and (g) Protocol Data Unit, PDU, Session Anchor, PSA UPF.

4. The method of claim 2 wherein the PFCP Node Report Response message comprises an acknowledgment that Downlink FAR in all affected PFCP sessions has been updated with apply-action set to buffering and remote F-TEID is removed.

## Patentansprüche

1. Verfahren, das von einer Steuerebenenfunktion (CP-Funktion) (800) in einem Telekommunikationsnetzwerk (1302) ausgeführt wird, um einen Neustart einer zweiten Benutzerebenenfunktion (UP-Funktion) (804) in einem Benutzerebenenpfad für Protokolldateneinheiten-Sitzungen (PDU-Sitzungen) zu verwalten, die von der CP-Funktion (800) verwaltet werden, wobei das Verfahren Folgendes umfasst:
- Empfangen von (816) einer Knotenberichtanforderungsnodenachricht für das Paketweiterleitungssteuerungsprotokoll, PFCP, von einer ersten UP-Funktion (802), die einen Bericht in Bezug auf einen Neustart der zweiten UP-Funktion (804) umfasst, wobei die PFCP-Knotenberichtanforderungsnachricht Folgendes anzeigt:
(1) dass die zweite UP-Funktion (804) neu gestartet wurde und der der Liste der IP-Adressen zugeordnete GTP-U-Kontext verloren gegangen ist; und
(2) dass die CP-Funktion (800) keine PFCP-Sitzungsänderungsanforderungsnachricht senden muss, um DL FAR pro PFCP-Sitzung zu ändern;
- Senden (818) einer PFCP-Knotenberichtantwortnachricht als Antwort auf die PFCP-Knotenberichtanforderungsnachricht, die eine Bestätigung umfasst, dass der Downlink-FAR in allen betroffenen PFCP-Sitzungen, die der neu gestarteten zweiten UP-Funktion (804) zugeordnet sind, mit Anwendungsaktion auf Pufferung eingestellt aktualisiert wurde und Remote-F-TEID von der zweiten UP-Funktion (804) entfernt wurde; und
- Freigeben von (820) PDU-Sitzungen, die vom Remote-GTP-U-Neustart betroffen sind, auf der Grundlage einer lokalen Konfiguration.

2. Verfahren, das von einer ersten Benutzerebenenfunktion (UP-Funktion) (802), die mit einer Steuerebenenfunktion (CP-Funktion) (800) kommuniziert, und einer zweiten UP-Funktion (804) in einem Telekommunikationsnetzwerk (1302) ausgeführt wird, um einen Neustart der zweiten UP-Funktion (804) zu verwalten, wobei das Verfahren Folgendes umfasst:
- Empfangen einer (814) GTP-Fehleranzeige, die einen Zeitstempel für die Wiederherstellung und eine Liste der IP-Adressen enthält, die von einem Neustart der zweiten UP-Funktion (804) betroffen sind, um anzuzeigen, dass alle diesen IP-Adressen zugeordneten GTP-U-Kontexte verloren gegangen sind;
- Senden einer Knotenberichtanforderungsnachricht für das Paketweiterleitungssteuerungsprotokoll, PFCP, an eine Steuerebenenfunktion (CP-Funktion) (800), um den Neustart der zweiten UP-Funktion (804) zu melden, wobei die PFCP-Knotenberichtanforderungsnachricht Folgendes anzeigt:
(1) dass die zweite UP-Funktion (804) neu gestartet wurde und der der Liste der IP-Adressen zugeordnete GTP-U-Kontext verloren gegangen ist; und
(2) dass die CP-Funktion (800) keine PFCP-Sitzungsänderungsanforderungsnachricht senden muss, um DL FAR pro PFCP-Sitzung zu ändern; und
- Empfangen (818) einer PFCP-Knotenberichtantwortnachricht.

3. Verfahren nach Anspruch 2, wobei der UP-1 (802) in einem oder mehreren von (a) New Radio, NR, Knoten B, gNB, (b) evolvierter Knoten B, eNB, (c) Serving Gateway-Steuerebenenfunktion, SGW-U, (d) Packet Data Network, PDN, Gateway-Steuerebenenfunktion, PGW-U, (e) Zwischenbenutzerebenenfunktion, I-UPF, (f) besuchende Benutzerebenenfunktion, V-UPF und (g) Protokolldateneinheit, PDU, Sitzungsanker, PSA UPF implementiert ist.

4. Verfahren nach Anspruch 2, wobei die PFCP-Knotenberichtantwortnachricht eine Bestätigung umfasst, dass Downlink FAR in allen betroffenen PFCP-Sitzungen mit Anwendungsaktion auf Pufferung eingestellt aktualisiert wurde und Remote-F-TEID entfernt wurde.

## Revendications

1. Procédé effectué par une fonction de plan de contrôle, CP, (800), dans un réseau de télécommunication (1302) pour gérer un redémarrage d'une seconde fonction de plan utilisateur, UP, (804) dans un chemin de plan utilisateur pour des sessions d'unité de données de protocole, PDU, que la fonction CP (800) gère, le procédé comprenant :
- la réception (816) d'un message de demande de rapport de nœud de protocole de contrôle de transfert de paquets, PFCP, provenant d'une première fonction UP (802) comprenant un rapport relatif à un redémarrage de la seconde fonction UP (804), où le message de demande de rapport de nœud PFCP indique :
(1) que la seconde fonction UP (804) a redémarré et que le contexte GTP-U associé à la liste des adresses IP a été perdu ; et
(2) que la fonction CP (800) n'a pas besoin d'envoyer un message de demande de modification de session PFCP pour modifier le DL FAR par session PFCP ;
- que l'envoi (818), en réponse au message de demande de rapport de nœud PFCP, d'un message de réponse de rapport de nœud PFCP qui comprend un accusé de réception indiquant que le FAR de liaison descendante dans toutes les sessions PFCP affectées associées à la seconde fonction UP redémarrée (804) a été mis à jour avec l'action d'application définie sur la mise en mémoire tampon, et que le F-TEID distant de la seconde fonction UP (804) a été supprimé ; et
- que la libération (820) de sessions PDU affectées par le redémarrage GTP-U distant sur la base d'une configuration locale.

2. Procédé effectué par une première fonction de plan utilisateur, UP (802) communiquant avec une fonction de plan de contrôle, CP (800) et une seconde fonction UP (804) dans un réseau de télécommunication (1302) pour gérer un redémarrage de la seconde fonction UP (804), le procédé comprenant :
- la réception (814) d'une indication d'erreur GTP contenant un horodatage de récupération et une liste d'adresses IP affectées par un redémarrage de la seconde fonction UP (804) pour indiquer que tout le contexte GTP-U associé à ces adresses IP a été perdu ;
- l'envoi (816) d'un message de demande de rapport de nœud de protocole de contrôle de transfert de paquets, PFCP, à une fonction de plan de contrôle, CP (Control Plane) (800) pour signaler le redémarrage de la seconde fonction UP (804), où le message de demande de rapport de nœud PFCP indique :
(1) que la seconde fonction UP (804) a redémarré et que le contexte GTP-U associé à la liste des adresses IP a été perdu ; et
(2) que la fonction CP (800) n'a pas besoin d'envoyer un message de demande de modification de session PFCP pour modifier le DL FAR par session PFCP ; et
- que la réception (818) d'un message de réponse de rapport de nœud PFCP.

3. Procédé selon la revendication 2, dans lequel l'UP-1 (802) est implémenté dans un ou plusieurs éléments parmi (a) Nœud B, gNB, nouvelle radio, NR, (b) Nœud B évolué, eNB, (c) fonction de plan de contrôle de passerelle de service, SGW-U, (d) fonction de plan de contrôle de passerelle, PGW-U, de réseau de données par paquets, PDN, (e) Fonction de plan utilisateur intermédiaire, I-UPF, (f) Fonction de plan utilisateur visiteur, V-UPF, et (g) UPF d'ancre de session d'unité de données de protocole, PDU, PSA.

4. Procédé selon la revendication 2, dans lequel le message de réponse de rapport de nœud PFCP comprend un accusé de réception indiquant que le FAR de liaison descendante dans toutes les sessions PFCP affectées a été mis à jour avec l'action d'application définie sur la mise en mémoire tampon et que le F-TEID distant est supprimé.
